# EUROPÄISCHE PATENTSCHRIFT

(11) **EP 4 389 361 B1**
(45) Veröffentlichungstag und Bekanntmachung des Hinweises auf die Patenterteilung: **17.09.2025**
(21) Anmeldenummer: 23218216.2
(22) Anmeldetag: 19.12.2023
(51) Int. Cl.: B25F 5/02, A01G 3/053, B27B 17/00

(54) **HANDGEFÜHRTES ARBEITSGERÄT**
HAND-HELD WORK DEVICE
OUTIL MANUEL

(30) Priorität: 22.12.2022 DE 102022134555
(43) Veröffentlichungstag der Anmeldung: 26.06.2024
(73) Patentinhaber: Andreas Stihl AG & Co. KG, 71336 Waiblingen (DE)
(72) Erfinder: Diehl, Heiko, 73732 Esslingen (DE); Härtel, Alexander, 71640 Ludwigsburg (DE)
(74) Vertreter: Karzel, Philipp

(56) Entgegenhaltungen:
- EP-A1- 2 746 008
- EP-A1- 3 922 414
- EP-A2- 2 196 084

## Beschreibung

Die Erfindung betrifft ein Arbeitsgerät nach den Oberbgegriffen der Ansprüche 1 und 10. Ein derartiges Arbeitsgerät ist zum Beispiel aus der EP2196084A2 bekannt.

Bei Arbeitsgeräten, deren Gehäuse aus zwei Gehäuseschalen zusammengesetzt ist, weisen die Gehäuseschalen üblicherweise eine Außenwand auf, die auf der innenliegenden Seite durch eine Rippenstruktur verstärkt ist. Zum Schutz des Gehäuses bei einem Aufprall oder einem Sturz des Arbeitsgeräts aus einer bestimmten Höhe ist üblicherweise ein zusätzliches elastisches Bauteil vorgesehen, das die beim Aufprall frei werdende Energie abfedern und elastisch aufnehmen kann. Ein solches zusätzliches Bauteil ist in der Regel im Bereich des rohrartigen Abschnitts, der die Grifföffnung im Bedienbereich begrenzt, an der Außenseite des Gehäuses angeordnet. Die Befestigung eines solchen zusätzlichen elastischen Bauelements ist konstruktiv aufwändig und kostenintensiv. Insbesondere bei akkubetriebenen Arbeitsgeräten, insbesondere mit großer Leistung, sind die Anforderungen, die das Arbeitsgerät bei einem Aufprall oder einem Sturz erfüllen muss, aufgrund des zunehmenden Gewichts und der gegenüber einem Verbrennungsmotor veränderten Schwerpunktlage hoch.

Der Erfindung liegt die Aufgabe zugrunde, ein gattungsgemäßes Arbeitsgerät derart weiterzubilden, dass es die bei einem Aufprall frei werdende Energie einfach und kostengünstig aufnehmen kann.

Diese Aufgabe wird durch ein Arbeitsgerät mit den Merkmalen des Anspruchs 1 gelöst. Die Erfindung sieht vor, dass die erste Gehäuseschale in Ansicht in Trennrichtung auf die innenliegende Seite der ersten Gehäuseschale im Bereich des rohrartigen Abschnitts einen zusammenhängenden starren Rippenbereich und einen zusammenhängenden elastischen Dehnungsbereich aufweist. In dem zusammenhängenden starren Rippenbereich ist die Rippenstruktur angeordnet. Der zusammenhängende elastische Dehnungsbereich dient zur elastischen Aufnahme von bei einem Aufprall des Arbeitsgeräts freiwerdender Energie. Im elastischen Dehnungsbereich ist die Steifigkeit des handgeführten Arbeitsgeräts gegenüber dem starren Rippenbereich geringer. Die Elastizität des Arbeitsgeräts ist im elastischen Dehnungsbereich größer als im starren Rippenbereich. Der zusammenhängende elastische Dehnungsbereich grenzt unmittelbar an den zusammenhängenden starren Rippenbereich an. Der zusammenhängende elastische Dehnungsbereich weist zu dem hinteren Ende des Gehäuses einen größeren Abstand auf als der zusammenhängende starre Rippenbereich. Der zusammenhängende elastische Dehnungsbereich ist frei von der Rippenstruktur. Dadurch kann beim Aufprall des Arbeitsgeräts, insbesondere auf einen harten Gegenstand oder auf dem Boden, die jeweils freiwerdende Energie zunächst in den starren Rippenbereich eingeleitet und im elastischen Dehnungsbereich abgefedert werden.

Das Gehäuse des handgeführten Arbeitsgeräts kann aus einem einzigen Werkstoff gefertigt sein. Ein zusätzliches elastisches Bauteil zur elastischen Aufnahme von Energie ist nicht erforderlich. Dadurch ist der konstruktive Aufwand zur Herstellung des handgeführten Arbeitsgeräts geringer. Das Arbeitsgerät lässt sich kostengünstig herstellen. Das Gehäuse kann aus einem relativ harten Werkstoff gefertigt sein. Durch den elastischen Dehnungsbereich ist es dennoch ausreichend flexibel. Aufgrund der Verwendungsmöglichkeit eines harten Werkstoffs kann das Gehäuse des Arbeitsgeräts, insbesondere der Bedienbereich des Gehäuses eine ausreichende Führungssteifigkeit zur Führung des handgeführten Arbeitsgeräts aufweisen. Aufgrund der Verwendungsmöglichkeit eines relativ harten Werkstoffs kann eine im Vergleich zum Stand der Technik geringe Wandstärke für das Gehäuse vorgesehen sein. Dadurch können der Bedienbereich und insbesondere der rohrartige Abschnitt der Außenwand des Gehäuses schlank gestaltet sein. Dadurch lässt sich der Rohrabschnitt komfortabel von einem Bediener umgreifen.

Der rohrartige Abschnitt erstreckt sich entlang einer Längsmittelachse. Insbesondere teilt die Längsmittelachse den rohrartigen Abschnitt in Ansicht in Trennrichtung auf die innenliegende Seite der ersten Gehäuseschale in eine der Grifföffnung zugeordnete Dehnungshälfte und eine dem hinteren Ende zugeordnete Rippenhälfte. Vorzugsweise ist der zusammenhängende Dehnungsbereich vollständig in der Dehnungshälfte angeordnet. Vorteilhaft ist der zusammenhängende Rippenbereich sowohl in der Rippenhälfte als auch in der Dehnungshälfte angeordnet.

In vorteilhafter Ausgestaltung der Erfindung erstreckt sich der elastische Dehnungsbereich in Richtung der Längsmittelachse von einem Anfangspunkt bis zu einem Endpunkt in einem Erstreckungsbereich. Die Grifföffnung besitzt in Ansicht in Trennrichtung auf das Gehäuse einen Flächenschwerpunkt. Der Erstreckungsbereich des zusammenhängenden Dehnungsbereichs erstreckt sich in Ansicht in Trennrichtung auf die innenliegende Seite der ersten Gehäuseschale bezüglich des Flächenschwerpunkts in einem zusammenhängenden Winkelbereich von mindestens 30°, insbesondere von mindestens 40°, bevorzugt von mindestens 50°. Dadurch ist das Arbeitsgerät in einem großen Bereich frei von der Rippenstruktur und kann daher bei einem Aufprall des Arbeitsgeräts die frei werdende Energie elastisch aufnehmen.

Die Rippenstruktur weist insbesondere mehrere Rippen auf. Unmittelbar benachbarte Rippen weisen bezüglich des Flächenschwerpunkts der Grifföffnung jeweils einen Nachbarwinkelabstand zueinander auf. Insbesondere ist der zusammenhängende Winkelbereich des Erstreckungsbereichs des Dehnungsbereichs größer als der größte Nachbarwinkelabstand der mehreren Rippen. Vorteilhaft ist der größte Nachbarwinkelabstand der mehreren Rippen kleiner als 25°. Insbesondere ist der größte Nachbarwinkelabstand der mehreren Rippen kleiner als 20°. Dadurch ist das Gehäuse im rohrartigen Abschnitt in dem Dehnungsbereich elastischer als in dem Rippenbereich.

Der rohrartige Abschnitt weist entlang der Längsmittelachse senkrecht zur Längsmittelachse verlaufende Querschnittsflächen auf. Die Querschnittsflächen besitzen in Ansicht in Trennrichtung auf die erste Gehäuseschale jeweils einen von Außenseite der Außenwand zu Außenseite der Außenwand des rohrartigen Abschnitts gemessenen Durchmesser.

Durch das hintere Ende des Gehäuses verläuft eine zugehörige Querschnittsfläche. Der Durchmesser der zugehörigen Querschnittsfläche, die durch das hintere Ende des Gehäuses verläuft, wird als Enddurchmesser bezeichnet. Der Enddurchmesser verläuft durch das hintere Ende des Gehäuses. Für den Fall, dass das hintere Ende des Gehäuses in Ansicht in Trennrichtung auf die erste Halbschale des Gehäuses kein Punkt, sondern ein ausgedehnter Bereich ist, wird derjenige Durchmesser der zugehörigen Querschnittsflächen als Enddurchmesser bezeichnet, der am größten ist. Für den Fall, dass es mehrere Durchmesser von zugehörigen Querschnittsflächen gibt, die gleich groß sind, werden all diese Durchmesser als Enddurchmesser bezeichnet.

Der Teil des Enddurchmessers, der im Rippenbereich des rohrartigen Abschnitts des Gehäuses liegt, wird als Rippenteilabschnitt des Enddurchmessers bezeichnet. Für den Fall, dass es Enddurchmesser mit verschiedenen Anteilen im Rippenbereich gibt, ist der Rippenteilabschnitt dem Enddurchmesser mit dem größten Anteil im Rippenbereich zugeordnet. Vorteilhaft beträgt die entlang des Enddurchmessers gemessene Länge des Rippenteilabschnitts weniger als 80% des Enddurchmessers. Der Teil des Enddurchmessers, der im Dehnungsbereich liegt, wird als Dehnungsteilabschnitt des Enddurchmessers bezeichnet. Vorteilhaft beträgt die entlang des Enddurchmessers gemessene Länge des Dehnungsteilabschnitts mehr als 20% des Enddurchmessers.

In vorteilhafter Weiterbildung der Erfindung beträgt ein maximaler Durchmesser aller Querschnittsflächen des rohrartigen Abschnitts mindestens 120%, insbesondere mindestens 130%, bevorzugt mindestens 140% des minimalen Durchmessers aller Querschnittsflächen des rohrartigen Abschnitts. Insbesondere schneidet der maximale Durchmesser aller Querschnittsflächen in Ansicht in Trennrichtung den Dehnungsbereich. Dadurch ist der rohrartige Abschnitt im Bereich des Dehnungsbereichs verdickt. Dadurch kann das Gehäuse die beim Aufprall des Arbeitsgeräts freiwerdende Energie am rohrartigen Abschnitt effizient aufnehmen. Die Energie kann sich auf eine große Fläche verteilen.

Vorteilhaft ist das Arbeitsgerät so ausgelegt, dass es in einer dafür vorgesehenen Abstellposition auf einer Horizontalebene abstellbar ist. Der Dehnungsbereich besitzt eine in der Abstellposition senkrecht zur Horizontalebene gemessene maximale Dehnungshöhe. Die Grifföffnung besitzt eine in der Abstellposition senkrecht zu der Horizontalebene gemessene maximale Öffnungshöhe. Vorteilhaft beträgt die maximale Dehnungshöhe mindestens 50%, insbesondere mindestens 60%, bevorzugt mindestens 70% der maximalen Öffnungshöhe. Dadurch ist der Dehnungsbereich ausreichend groß, um bei einem Aufprall des Arbeitsgeräts Energie elastisch aufnehmen zu können.

In vorteilhafter Gestaltung der Erfindung ist der Rippenbereich in Ansicht in Trennrichtung auf die innen liegende Seite der ersten Gehäuseschale unmittelbar benachbart zu der das hintere Ende des Gehäuses bildenden Außenwand angeordnet. Dadurch kann die Rippenstruktur des Rippenbereichs die Außenwand im Bereich des hinteren Endes, das einen besonders exponierten Aufprallbereich bildet, verstärken. Der Rippenbereich kann so für eine Integrität der Außenwand des Gehäuses im Bereich des hinteren Endes bei einem Aufprall sorgen. Die Energie kann auf die Rippen des Rippenbereichs verteilt werden.

Vorteilhaft ist der Dehnungsbereich in Ansicht in Trennrichtung auf die innenliegende Seite der ersten Gehäuseschale unmittelbar benachbart zu der die Grifföffnung begrenzenden Außenwand angeordnet. Dadurch, dass der Dehnungsbereich angrenzend an eine Außenwand angeordnet ist, kann das Gehäuse besonders flexibel gestaltet sein. Zweckmäßig weist die erste Gehäuseschale ein Verbindungselement auf. Das Verbindungselement wird auch als Verbindungsstruktur bezeichnet. Das Verbindungselement dient zur Verbindung der ersten Gehäuseschale mit der zweiten Gehäuseschale. Insbesondere ist das Verbindungselement ein Schraubdom. Vorteilhaft sind mehrere Rippen der Rippenstruktur so mit dem Verbindungselement verbunden und so in der ersten Gehäuseschale angeordnet, dass sie Kraft in das Verbindungselement einleiten können. Dadurch kann die Energie in eine zentrale, stabile Stelle des Gehäuses geleitet werden. Insbesondere ist die erste Gehäuseschale über das Verbindungselement so mit der zweiten Gehäuseschale verbunden, dass über das Verbindungselement zumindest ein Teil der bei einem Aufprall des Arbeitsgeräts frei werdenden Energie von der ersten Gehäuseschale über das Verbindungselement auf die zweite Gehäuseschale übertragen werden kann. Dadurch kann die bei einem Aufprall des Arbeitsgeräts entstehende Energie gleichmäßig auf das gesamte Gehäuse verteilt werden. Dies dient der Integrität des Gehäuses. Insbesondere ist das Verbindungselement in Ansicht in Trennrichtung auf die Innenseite der ersten Gehäuseschale im Rippenbereich angeordnet.

In vorteilhafter Gestaltung der Erfindung bestehen die erste Gehäuseschale und die zweite Gehäuseschale vollständig aus glasfaserverstärktem Kunststoff. Insbesondere handelt es sich bei dem glasfaserverstärktem Kunststoff um Polyamid 6 (PA6). Vorteilhaft weist das PA6 einen Glasfaseranteil von 15% auf. PA6 mit einem Glasfaseranteil von 15% wird als PA6GF15 bezeichnet. Bevorzugt weist das PA6 einen Glasfaseranteil von 30% auf und wird als PA6GF30 bezeichnet. Insbesondere ist das PA6 schlagzäh modifiziert.

Insbesondere ist die zweite Gehäuseschale bezüglich der Rippenstruktur und des Dehnungsbereichs analog zur ersten Gehäuseschale ausgebildet. Die zweite Gehäuseschale zeigt sämtliche vorstehend genannten Merkmale der ersten Gehäuseschale.

Die Aufgabe wird auch durch ein Arbeitsgerät mit den Merkmalen des Anspruchs 11 gelöst. Erfindungsgemäß weist die erste Gehäuseschale in Ansicht in Trennrichtung auf die innenliegende Seite der ersten Gehäuseschale im Krümmungsabschnitts auf: einen zusammenhängenden starren Rippenabschnitt, in dem Rippen der Rippenstruktur angeordnet sind und einen zusammenhängenden elastischen Dehnungsabschnitt zur elastischen Aufnahme von bei einem Aufprall des Arbeitsgeräts freiwerdender Energie. Der Dehnungsabschnitt grenzt unmittelbar an den Rippenabschnitt an und weist einen größeren Abstand zum hinteren Ende des Gehäuses auf als der Rippenabschnitt. In Ansicht in Trennrichtung auf die innenliegende Seite der ersten Gehäuseschale:
- Weist der Rippenabschnitt eine Rippenaußenkontur mit einer Rippenfläche auf,
- Weist der Dehnungsabschnitt eine Dehnungsaußenkontur mit einer Dehnungsabschnittsfläche auf,
- Beträgt der mit Rippen bedeckte Flächenanteil innerhalb der Rippenaußenkontur mindestens 30%, insbesondere mindestens 35% der Rippenfläche und
- Beträgt der mit Rippen bedeckte Flächenanteil innerhalb der Dehnungsaußenkontur weniger als 10%, insbesondere weniger als 5%, bevorzugt 0% der Dehnungsabschnittsfläche.

Dadurch werden ebenfalls die zum Anspruch 1 genannten Vorteile erreicht.

Bevorzugt weist der Krümmungsabschnitt in Ansicht in Trennrichtung auf die innenliegende Seite der ersten Gehäuseschale eine Gesamtaußenkontur mit einer Krümmungsfläche auf und die Dehnungsabschnittsfläche beträgt mindesten 20%, insbesondere mindestens 30% der Krümmungsfläche. Dadurch ist die Dehnungsabschnittsfläche hinreichend groß, um die freiwerdende Energie elastisch aufnehmen zu können.

Vorteilhaft ist der Rippenabschnitt in Ansicht in Trennrichtung auf die innenliegende Seite der ersten Gehäuseschale unmittelbar benachbart zu der das hinteren Ende des Gehäuses bildenden Außenwand angeordnet. Insbesondere ist der Dehnungsabschnitt in Ansicht in Trennrichtung auf die innenliegende Seite der ersten Gehäuseschale unmittelbar benachbart zu der die Grifföffnung begrenzenden Außenwand angeordnet. Dadurch, dass der Dehnungsabschnitt angrenzend an eine Außenwand angeordnet ist, kann das Gehäuse besonders flexibel gestaltet sein.

Insbesondere ist die zweite Gehäuseschale bezüglich der Rippenstruktur und des Dehnungsabschnitts analog zur ersten Gehäuseschale ausgebildet. Die zweite Gehäuseschale zeigt sämtliche vorstehend genannten Merkmale der ersten Gehäuseschale.

Insbesondere weist auch die zweite Gehäuseschale einen Rippenbereich und/oder einen Rippenabschnitt und einen Dehnungsbereich und/oder einen Dehnungsabschnitt auf.

Insbesondere weist auch die zweite Gehäuseschale ein Verbindungselement auf. Auch das Verbindungselement der zweiten Gehäuseschale kann als Verbindungsstruktur bezeichnet werden. Zweckmäßig ist das Verbindungselement der zweiten Gehäuseschale im Rippenbereich der zweiten Gehäuseschale angeordnet.

Ausführungsbeispiele der Erfindung werden im Folgenden anhand der Zeichnung erläutert. Es zeigen:
- Fig. 1: eine schematische Seitenansicht eines als Motorkettensäge ausgebildeten Arbeitsgeräts,
- Fig. 2: eine schematische Seitenansicht eines als Heckenschneider ausgebildeten Arbeitsgeräts,
- Fig. 3: eine schematische Seitenansicht eines als Trennschleifer ausgebildeten Arbeitsgeräts,
- Fig. 4: eine schematische Draufsicht von oben auf das Arbeitsgerät aus Fig. 1,
- Fig. 5: eine schematische Ansicht in Trennrichtung der beiden in Fig. 4 dargestellten Gehäuseschalen auf die Innenseite der ersten Gehäuseschale,
- Fig. 6: eine schematische Ansicht in Trennrichtung der beiden in Fig. 4 dargestellten Gehäuseschalen auf die innenliegende Seite der zweiten Gehäuseschale,
- Fig. 7: eine vergrößerte Detaildarstellung des rohrartigen Abschnitts der in Fig. 5 dargestellten ersten Gehäuseschale,
- Fig. 8: eine vergrößerte Detaildarstellung des rohrartigen Abschnitts der in Fig. 6 dargestellten zweiten Gehäuseschale, und
- Fig. 9: ein Detail aus Fig. 4.

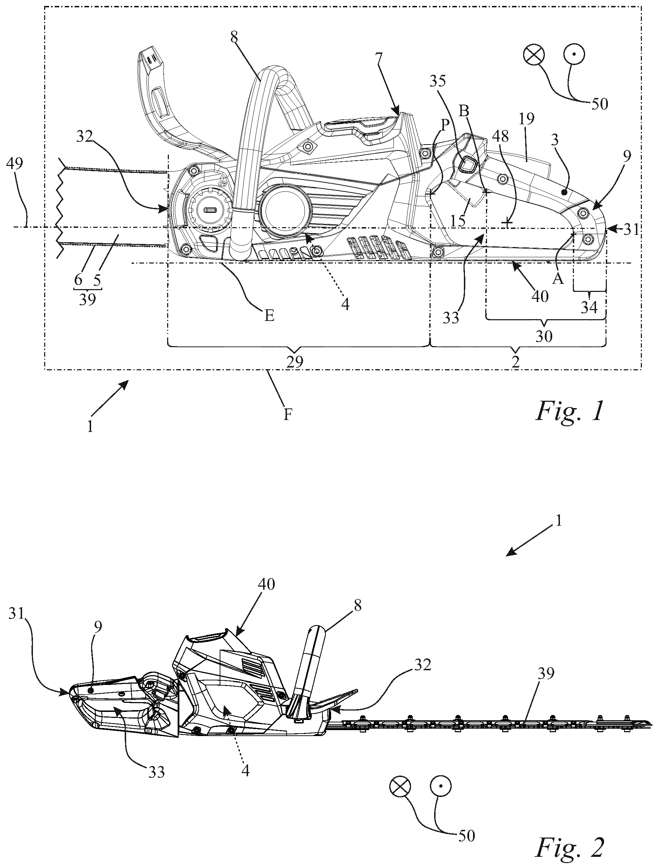

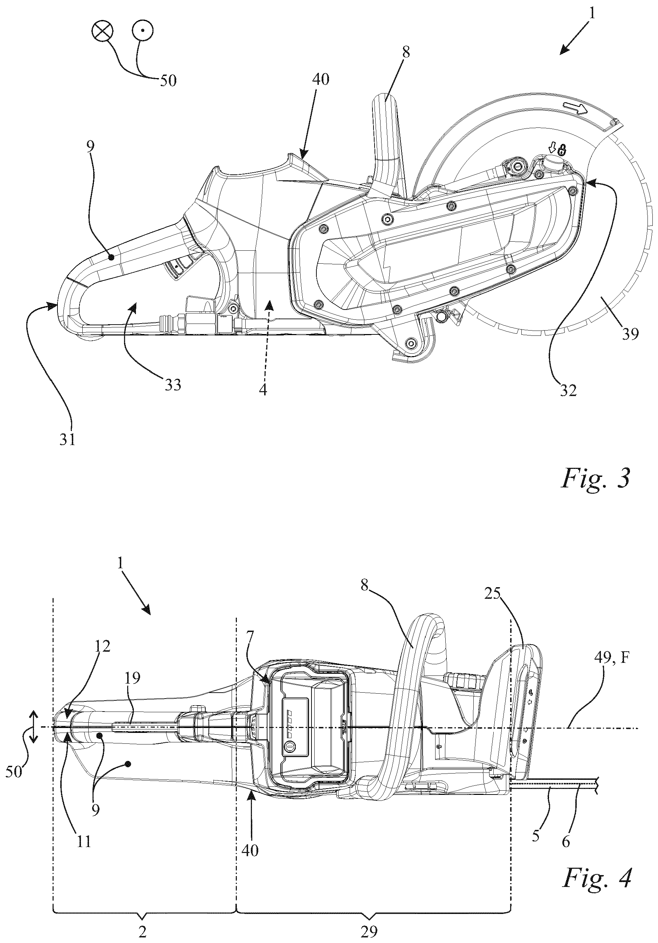

Die Fig. 1 bis 9 zeigen handgeführte Arbeitsgeräte 1. Im Ausführungsbeispiel nach den Fig. 1 und 4 bis 9 ist das handgeführte Arbeitsgerät 1 eine Motorkettensäge. Im Ausführungsbeispiel nach Fig. 2 ist das handgeführte Arbeitsgerät 1 eine Heckenschere. Im Ausführungsbeispiel nach Fig. 3 ist das handgeführte Arbeitsgerät 1 ein Trennschleifer. Die nachfolgende Beschreibung trifft grundsätzlich auf alle Ausführungsbeispiele zu. Sollte eine Angabe sich lediglich auf eines der drei Ausführungsbeispiele beziehen, so ist dies explizit angegeben.

Das Arbeitsgerät ist im bestimmungsgemäßen Betrieb handgeführt. Das Arbeitsgerät 1 ist ein tragbares Arbeitsgerät. Der Begriff "tragbar" ist in diesem Zusammenhang so zu verstehen, dass das Arbeitsgerät im bestimmungsgemäßen Betrieb getragen werden kann. Während des Betriebs des Arbeitsgeräts ist es nicht erforderlich, dass das Arbeitsgerät 1 durch eine Vorrichtung oder ein Werkstück abgestützt wird. Das Arbeitsgerät kann im bestimmungsgemäßen Betrieb durch den Bediener allein getragen werden.

Wie in den Fig. 1 bis 3 dargestellt, umfasst das Arbeitsgerät 1 ein Gehäuse 40. Das Arbeitsgerät 1 umfasst ein Werkzeug 39. Das Werkzeug 39 ist an dem Gehäuse 40 angeordnet. In den Ausführungsbeispielen ist das Werkzeug 39 an dem Gehäuse 40 befestigt. Im Ausführungsbeispiel nach den Fig. 1 und 4 bis 9 ist das Werkzeug 39 durch eine Führungsschiene 5 und eine Sägekette 6 gebildet. Im Ausführungsbeispiel nach Fig. 2 ist das Werkzeug 39 durch einen Messerbalken gebildet. Im Ausführungsbeispiel nach Fig. 3 ist das Werkzeug 39 durch ein Sägeblatt gebildet.

Das Arbeitsgerät 1 umfasst in den Ausführungsbeispielen einen Elektromotor 4. Alternativ kann aber auch eine andere Art von Motor, beispielsweise ein Verbrennungsmotor vorgesehen sein. Der Elektromotor 4 dient zum Antrieb des Werkzeugs 39. Im Ausführungsbeispiel nach den Fig. 1 und 4 bis 9 wird mittels des Elektromotors 4 die Sägekette 6 um die Führungsschiene 5 umlaufend angetrieben. Der Elektromotor 4 ist in allen Ausführungsbeispielen in dem Gehäuse 40 angeordnet.

Das Arbeitsgerät 1 umfasst ein Griffrohr 8. Das Griffrohr 8 umgreift das Gehäuse 40 teilweise. Es kann auch vorgesehen sein, dass das Griffrohr das Gehäuse vollständig umgreift. Das Griffrohr 8 übergreift das Griffgehäuse 40. Im bestimmungsgemäßen Betrieb des Arbeitsgeräts 1 kann der Bediener das Griffrohr 8 von oben umgreifen. Das Griffrohr 8 ist ein Bügelgriff.

Das Gehäuse 40 weist ein hinteres Ende 31 auf. Das hintere Ende 31 ist im Betrieb des Arbeitsgerät 1 dem Benutzer zugewandt. Das Gehäuse 40 weist ein vorderes Ende 32 auf. Das vordere Ende 32 des Gehäuses 40 ist im bestimmungsgemäßen Betrieb des Arbeitsgeräts dem Bediener abgewandt. An dem vorderen Ende 32 ist das Werkzeug 39 angeordnet. In den Ausführungsbeispielen umschließt das Gehäuse 40 einen zusammenhängenden Innenraum.

Wie in Fig. 4 beispielhaft für alle Ausführungsbeispiele dargestellt, ist das Gehäuse 40 durch eine erste Gehäuseschale 11 und eine zweite Gehäuseschale 12 gebildet. Die erste Gehäuseschale 11 und die zweite Gehäuseschale 12 werden auch als Halbschalen bezeichnet. Die erste Gehäuseschale 11 und die zweite Gehäuseschale 12 liegen entlang einer Trennfläche aneinander an. Beim Zusammenbau des Gehäuses 40 sind die erste Gehäuseschale 11 und die zweite Gehäuseschale 12 in einer Trennrichtung 50 zusammensetzbar. Die Trennrichtung 50 wird auch als Fügerichtung bezeichnet. Die Trennrichtung 50 entspricht der Entformungsrichtung der ersten Gehäuseschale 11. Die Trennrichtung 50 entspricht relativ in Bezug auf die ersten Gehäuseschale 11 gesehen der Entformungsrichtung der ersten Gehäuseschale 11. Die Trennrichtung 50 entspricht relativ in Bezug auf die zweiten Gehäuseschale 12 gesehen der Entformungsrichtung der zweiten Gehäuseschale 12. Die Trennrichtung 50 ist eine Doppelrichtung. Die Trennrichtung 50 zeigt in zwei entgegengesetzte Richtungen. Das fertig zusammengebaute Gehäuse 40 ist in Trennrichtung 50 trennbar. Hierbei kann die erste Gehäuseschale 11 in Trennrichtung 50 von der zweiten Gehäuseschale 12 entfernt werden. Hierbei ist relativ zu der ersten Gehäuseschale 11 lediglich eine einzige Bewegung der zweiten Gehäuseschale 12 in Richtung der Trennrichtung 50 erforderlich.

Die erste Gehäuseschale 11 und die zweite Gehäuseschale 12 sind Spritzgussteile. Die erste Gehäuseschale 11 und die zweite Gehäuseschale 12 bestehen ausschließlich aus glasfaserverstärktem Kunststoff. Insbesondere bestehen die erste Gehäuseschale 11 und die zweite Gehäuseschale 12 aus Polyamid 6 (PA6). Bevorzugt ist das Polyamid 6 (PA6) mit einem Glasfaseranteil verstärkt. Bevorzugt beträgt der Glasfaseranteil des Polyamid 6 15% (PA6GF15), in den Ausführungsbeispielen 30% (PA6GF30). Insbesondere ist das Polyamid 6 (PA6), bevorzugt das PA6GF15, in den Ausführungsbeispielen das PA6GF30, schlagzäh modifiziert.

In den Ausführungsbeispielen ist die erste Gehäuseschale 11 einteilig ausgebildet. Die erste Gehäuseschale 11 ist insbesondere in einem einzigen Spritzgussverfahrensschritt gegossen. In den Ausführungsbeispielen ist die zweite Gehäuseschale 12 einteilig ausgebildet. Die zweite Gehäuseschale 12 ist insbesondere in einem einzigen Spritzgussverfahrensschritt hergestellt.

Im zusammengebauten Zustand bilden die Gehäuseschalen 11 und 12 das Gehäuse 40. Es kann vorgesehen sein, dass das Gehäuse zwei getrennt voneinander ausgebildete Innenräume umschließt. Insbesondere kann das Gehäuse ein Motorgehäuse und ein Griffgehäuse umfassen, die getrennt voneinander ausgebildet sind. In dem Motorgehäuse sind dann der Motor, insbesondere ein Elektromotor, und insbesondere ein Akkuschacht angeordnet. Das Motorgehäuse und das Griffgehäuse können über einen Schwingspalt und den Schwingspalt überbrückende Antivibrationselemente miteinander verbunden sein. In diesem Fall umfasst das Gehäuse vier Gehäuseschalen. In den Ausführungsbeispielen sind jedoch insgesamt nur zwei Gehäuseschalen zur Bildung des Gehäuses vorgesehen. Das ausschließlich durch die erste Gehäuseschale 11 und die zweite Gehäuseschale 12 gebildete Gehäuse 40 erfüllt sowohl die Funktion der Einhausung des Elektromotors 4 als auch die Funktion der Ausbildung eines Griffbereichs. Zwischen diesen beiden Funktionsbereichen des Gehäuses 40 sind in den Ausführungsbeispielen keine separaten Antivibrationselemente wie Federn oder Pufferelemente vorgesehen.

Das Gehäuse 40 weist eine Grifföffnung 33 auf, wie beispielsweise in Fig. 1 dargestellt. Die Grifföffnung 33 durchdringt das Gehäuse 40 des Arbeitsgeräts 1 vollständig. Die Grifföffnung 33 durchdringt das Gehäuse 40 in Trennrichtung 50 vollständig. Das Gehäuse 40 weist einen Bedienbereich 2 auf. Die Grifföffnung 33 ist im Bedienbereich 2 angeordnet.

Das Arbeitsgerät 1 ist so ausgelegt, dass es in einer dafür vorgesehenen Abstellposition auf eine Horizontalebene E abstellbar ist. Es kann vorgesehen sein, dass das Arbeitsgerät 1 eine Abstellfläche zum Abstellen des Arbeitsgeräts 1 in der Abstellposition aufweist. In den Ausführungsbeispielen weist das Arbeitsgerät 1 Abstellvorsprünge auf, auf denen es auf der Horizontalebene E abstellbar ist. In der Abstellposition ist das Arbeitsgerät 1 derart auf der Horizontalebene E abstellbar, dass das Griffrohr 8 vom Bediener von oben umgriffen werden kann. Auf diese Weise kann das Arbeitsgerät 1 schnell und einfach angehoben und aufgenommen werden. Die Horizontalebene E verläuft in der Horizontalen. In der Abstellposition verläuft die Trennrichtung 50 parallel zur Horizontalebene E. Das Gehäuse 40 ist vertikal in die erste Gehäuseschale 11 und die zweite Gehäuseschale 12 geteilt.

Wie insbesondere in Fig. 1 dargestellt, erstreckt sich das Gehäuse 40 entlang einer Längsachse 49. Die Längsachse 49 erstreckt sich von dem hinteren Ende 31 des Gehäuses 40 zu dem vorderen Ende 32 des Gehäuses 40. Die Längsachse 49 verläuft in allen Ausführungsbeispielen parallel zu einer Werkzeugebene. Wie in den Ausführungsbeispielen nach den Fig. 1 und 4 bis 9 verläuft die Längsachse 49 parallel zur Ebene der Führungsschiene 5. Im Ausführungsbeispiel nach Fig. 2 verläuft die Längsachse 49 parallel zur Ebene, in der sich die Messerbalken hin und her bewegen. Im Ausführungsbeispiel nach Fig. 3 verläuft die Längsachse 49 parallel zur Ebene des Sägeblatts.

Das Arbeitsgerät 1 besitzt eine in Fig. 1 dargestellte Längsebene F. In der Abstellposition verläuft die Längsebene F senkrecht zur Horizontalebene E. Die Längsebene F enthält die Längsachse 49. In den Ausführungsbeispielen verläuft die Trennrichtung 50 senkrecht zur Längsebene F. In den Ausführungsbeispielen liegen die erste Gehäuseschale 11 und die zweite Gehäuseschale 12 in der Längsebene F aneinander an. Die Längsebene F kann auch als Trennebene des Gehäuses 40 oder als Teilungsebene des Gehäuses 40 bezeichnet werden. Es kann aber auch vorgesehen sein, dass die beiden Gehäusehälften entlang einer Trennfläche aneinander anliegen, die sich in mehreren Ebenen erstreckt. In den Ausführungsbeispielen erstreckt sich die Trennfläche zwischen der ersten Gehäuseschale 11 und der zweiten Gehäuseschale 12 in einer einzigen Ebene. In den Ausführungsbeispielen nach den Fig. 1 und 4 bis 9 verläuft die Längsebene F parallel zur Ebene der Führungsschiene 5. Im Ausführungsbeispiel nach Fig. 2 verläuft die Längsebene F senkrecht zur Ebene, in der sich die Messerbalken gegeneinander bewegen. Im Ausführungsbeispiel nach Fig. 3 verläuft die Längsebene F parallel zur Ebene des Sägeblatts.

Der Bedienbereich 2 des Gehäuses 40 erstreckt sich in Richtung der Längsachse 49 von dem hinteren Ende 31 des Gehäuses 40 bis zu einem Ende der Grifföffnung 33. Die Grifföffnung 33 besitzt einen Endpunkt P. Der Endpunkt P ist am Rand der Grifföffnung 33 angeordnet. Der Endpunkt P ist der Punkt der Grifföffnung 33, der zu dem hinteren Ende 31 des Gehäuses 40 den größten in Richtung der Längsachse 49 gemessenen Abstand aufweist.

Der Bedienbereich 2 des Gehäuses 40 erstreckt sich in Richtung der Längsachse 49 von dem hinteren Ende 31 des Gehäuses 40 bis zu dem Endpunkt P. In dem Bedienbereich 2 ist zur Bedienung eines Elektromotors 4 des Arbeitsgeräts 1 ein Bedienelement 15 angeordnet. Das Bedienelement 15 wird umgangssprachlich auch als Gashebel bezeichnet. Die Grifföffnung 33 ist vollständig im Bedienbereich 2 des Gehäuses 40 angeordnet. Das Gehäuse 40 weist eine Außenwand 3 auf. Die Außenwand 3 besitzt einen rohrartigen Abschnitt 9. "Rohrartig" umfasst in diesem Zusammenhang sämtliche Formen, die um eine Mittelachse geschlossen umlaufen. Der rohrartige Abschnitt 9 der Außenwand 3 des Gehäuses 40 begrenzt die Grifföffnung 33 zumindest teilweise. Der rohrartige Abschnitt 9 begrenzt die Grifföffnung 33 im Bereich des hinteren Endes 31 des Gehäuses 40. Der rohrartige Abschnitt 9 ist vollständig im Bedienbereich 2 des Gehäuses 40 angeordnet. Im rohrartigen Abschnitt 9 der Außenwand 3 ist das Bedienelement 15 angeordnet. Der rohrartige Abschnitt 9 ist im Bereich des hinteren Endes 31 umgebogen. Der rohrartige Abschnitt 9 weist im Bereich des hinteren Endes 31 des Gehäuses 40 eine Krümmung auf. Der rohrartige Abschnitt 9 ist im Bereich des hinteren Endes 31 des Gehäuses 40 um mindestens 145° umgebogen.

In Fig. 4 ist zu erkennen, dass der rohrartige Abschnitt 9 in Ansicht von oben auf das Arbeitsgerät 1 im Bereich, der näher zur Horizontalebene E (Fig. 1) liegt, breiter ist als in dem Bereich, der weiter entfernt von der Horizontalebene E auf der anderen Seite der Grifföffnung 33 liegt. Auch eine solche Gestaltung des Abschnitts 9 wird als rohrartig bezeichnet. Der rohrartige Abschnitt 9 besitzt aber einen Abschnitt der sich vom Benutzer umgreifen lässt.

Die Grifföffnung 33 besitzt in Ansicht in Trennrichtung 50 auf das Gehäuse 40 einen in Fig. 1 dargestellten Flächenschwerpunkt 48. Der Flächenschwerpunkt 48 ist der von der Außenkontur der Grifföffnung 33 in Ansicht in Trennrichtung 50 auf das Gehäuse 40 begrenzten Fläche. In Ansicht in Trennrichtung 50 auf das Gehäuse 40 läuft der rohrartige Abschnitt 9 um mindestens 270° um den Flächenschwerpunkt 48 um. Der rohrartige Abschnitt 9 ist zum hinteren Ende 31 des Gehäuses 41 hin in Ansicht in Trennrichtung 50 auf das Gehäuse 40 geschlossen. Für den Betrieb des Arbeitsgeräts 1 kann der Bediener den rohrartigen Abschnitt 9 so umgreifen, dass er das Bedienelement 15 betätigen kann. Der rohrartige Abschnitt 9 ist in Ansicht in Trennrichtung 50 auf das Gehäuse 40 zum vorderen Ende 32 des Gehäuses 40 hin geöffnet.

Das Bedienelement 15 besitzt einen Bedienpunkt B. Der Bedienpunkt B ist der Punkt des Bedienelements 15 des in Ansicht in Trennrichtung 50 auf das Gehäuse 40 in unbetätigtem Zustand des Bedienelements 15 sichtbaren Bedienelements, der den kleinsten in Richtung der Längsachse 49 gemessenen Abstand zum hinteren Ende 31 des Gehäuses 40 aufweist. Ausgehend von dem Bedienpunkt B erstreckt sich in Richtung der Längsachse 49 bis zum hinteren Ende 31 des Gehäuses 40 ein Rohrbereich 30. Der Rohrbereich 30 ist in Fig. 1 eingezeichnet. Der rohrartige Abschnitt 9 der Außenwand 3 des Gehäuses 40 erstreckt sich ausschließlich im Rohrbereich 30. Der rohrartige Abschnitt 9 erstreckt sich bezüglich der Richtung der Längsachse 49 über den gesamten Rohrbereich 30. Dadurch, dass der rohrartige Abschnitt 9 umgebogen ist, erstreckt sich der rohrartige Abschnitt 9 zweimal über den gesamten Rohrbereich 30. Ein Endpunkt des rohrartigen Abschnitts 9 und ein Anfangspunkt des rohrartigen Abschnitts 9 sind jeweils am selben Ende des Rohrbereichs 30, nämlich am dem dem hinteren Ende 31 abgewandten Ende des Rohrbereichs 30, angeordnet.

Das Gehäuse 40 weist einen Frontbereich 29 auf. Der Frontbereich 29 erstreckt sich in Richtung der Längsachse 49 von dem Endpunkt P der Grifföffnung 33 bis zu dem vorderen Ende 32 des Gehäuses 40.

Das Gehäuse 40 besitzt einen Krümmungsbereich 34. Der Krümmungsbereich 34 ist am hinteren Ende 31 des Gehäuses 40 angeordnet. Im Krümmungsbereich 34 krümmt sich der rohrartige Abschnitt 30 des Gehäuses 40. Der Krümmungsbereich 34 ist im Bedienbereich 2 des Gehäuses 40 angeordnet. Der Krümmungsbereich ist im rohrartigen Abschnitt 30 angeordnet.

Die Grifföffnung 33 besitzt einen Anfangspunkt A. Der Anfangspunkt A ist am Rand der Grifföffnung 33 angeordnet. Der Anfangspunkt A ist der Punkt der Grifföffnung 33, der zu dem hinteren Ende 31 des Gehäuses 40 den kleinsten in Richtung der Längsachse 49 gemessenen Abstand aufweist. Der Krümmungsbereich 34 erstreckt sich in Ansicht in Trennrichtung 50 auf die innenliegende Seite der ersten Gehäuseschale 11 in Längsrichtung 49 des Gehäuses 40 von dem hinteren Ende 31 bis zu dem Anfangspunkt A der Grifföffnung 33.

Das Arbeitsgerät 1 umfasst einen Akkuschacht 7. Der Akkuschacht 7 ist in den Ausführungsbeispielen durch das Gehäuse 40 ausgebildet. Der Akkuschacht 7 ist in dem Frontbereich 29 des Gehäuses 40 angeordnet. Der Akkuschacht 7 ist von einer Außenseite des Gehäuses 40 begrenzt. Das Arbeitsgerät ist vorzugsweise so ausgelegt, dass der Akkuschacht 7 einen in den Akkuschacht 7 eingeführten, nicht dargestellten Akkupack bezüglich einer Umfangsrichtung um die Einführrichtung umschließt, so dass lediglich eine Stirnseite des Akkupacks von außerhalb des Akkuschachts 7 sichtbar ist. Die Einführrichtung des Akkus in den Akkuschacht 7 verläuft parallel zur Längsebene F. Es kann auch vorgesehen sein, dass der Akkuschacht separat vom Gehäuse ausgebildet ist.

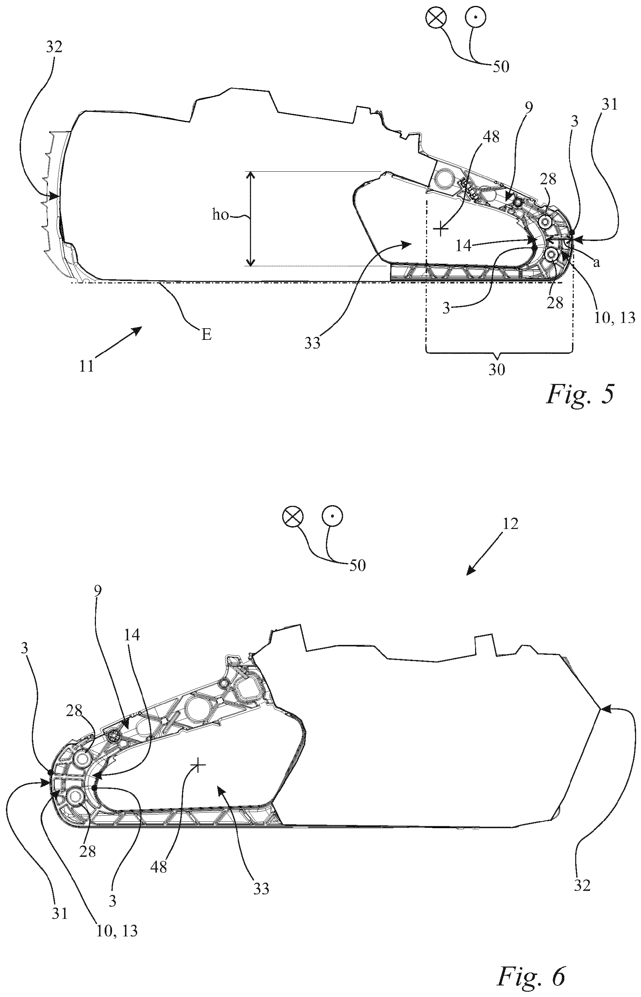

Fig. 5 zeigt die erste Gehäuseschale 11 in Ansicht in Trennrichtung 50 auf die innenliegende Seite der ersten Gehäuseschale 11. Die Außenwand 3 der ersten Gehäuseschale 11 ist im Bereich des rohrartigen Abschnitts 9 durch eine im Gehäuse 40 innenliegende Rippenstruktur 10 verstärkt. Die erste Gehäuseschale 11 weist in Ansicht in Trennrichtung 50 auf die innenliegende Seite der ersten Gehäuseschale 11 im Bereich des rohrartigen Abschnitts 9 einen zusammenhängenden starren Rippenbereich 13 auf. In dem zusammenhängenden starren Rippenbereich 13 der ersten Gehäuseschale 11 ist die Rippenstruktur 10 angeordnet. Die Rippenstruktur 10 ist vollständig in dem zusammenhängenden starren Rippenbereich 13 angeordnet. Der Rippenbereich 13 ist in dem in Fig. 1 dargestellten Bedienbereich 2 angeordnet.

Die erste Gehäuseschale 11 weist in Ansicht in Trennrichtung 50 auf die innenliegende Seite der ersten Gehäuseschale 11 im Bereich des rohrartigen Abschnitts 9 einen zusammenhängenden elastischen Dehnungsbereich 14 auf. Der zusammenhängende elastische Dehnungsbereich 14 dient zur elastischen Aufnahme von bei einem Aufprall des Arbeitsgeräts 1 freiwerdender Energie. Der Dehnungsbereich 14 weist eine geringere Rippendichte als der Rippenbereich 13 auf. In Ansicht in Trennrichtung 50 auf die innenliegende Seite der ersten Gehäuseschale 11 weist der Dehnungsbereich 14 eine geringere Fläche an Rippen pro Flächeneinheit auf als der Rippenbereich 13. Insbesondere beträgt die Fläche an Rippen pro Flächeneinheit im Rippenbereich 13 mindestens 130%, vorteilhaft mindestens 200%, bevorzugt mindestens 250% der Fläche an Rippen im Dehnungsbereich 14. Insbesondere beträgt die Fläche an Rippen im Dehnungsbereich 14 höchstens 70%, insbesondere höchstens 50%, bevorzugt höchstens 30% der Fläche an Rippen im Rippenbereich 13. Der Dehnungsbereich 14 ist in den Ausführungsbeispielen frei von der Rippenstruktur 10. Der Dehnungsbereich der ersten Gehäuseschale 11 besitzt eine geringere Steifigkeit als der zusammenhängende starre Rippenbereich 13 der ersten Gehäuseschale 11. Das Arbeitsgerät 1 ist so ausgelegt, dass bei einem Aufprall des Arbeitsgeräts 1 mit dem Bereich um das hintere Ende 130 des Gehäuses 40 herum auf einen harten Gegenstand aufgrund des zusammenhängenden elastischen Dehnungsbereichs 14 der ersten Gehäuseschale 11 eine elastische Verformung des Gehäuses 40 möglich ist. Auf diese Weise kann die bei dem Aufprall freigesetzte Energie vom Gehäuse 40 elastisch aufgenommen werden. Aufgrund der Verstärkung der Außenwand 3 des Gehäuses 40 im Rippenbereich 13 ist die Steifigkeit des Gehäuses 40 im Rippenbereich 13 größer als im Dehnungsbereich 14.

Der zusammenhängende elastische Dehnungsbereich 14 grenzt unmittelbar an den zusammenhängenden starren Rippenbereich 13 an. Der Dehnungsbereich 14 weist zu dem hinteren Ende 31 des Gehäuses 40 einen Abstand a auf. Der Abstand a des Dehnungsbereichs 14 zu dem hinteren Ende 31 des Gehäuses 40 ist größer als der Abstand des Rippenbereichs 13 zu dem hinteren Ende 31 des Gehäuses 40. In den Ausführungsbeispielen grenzt der Rippenbereich 13 unmittelbar an das hintere Ende 31 des Gehäuses 40 an.

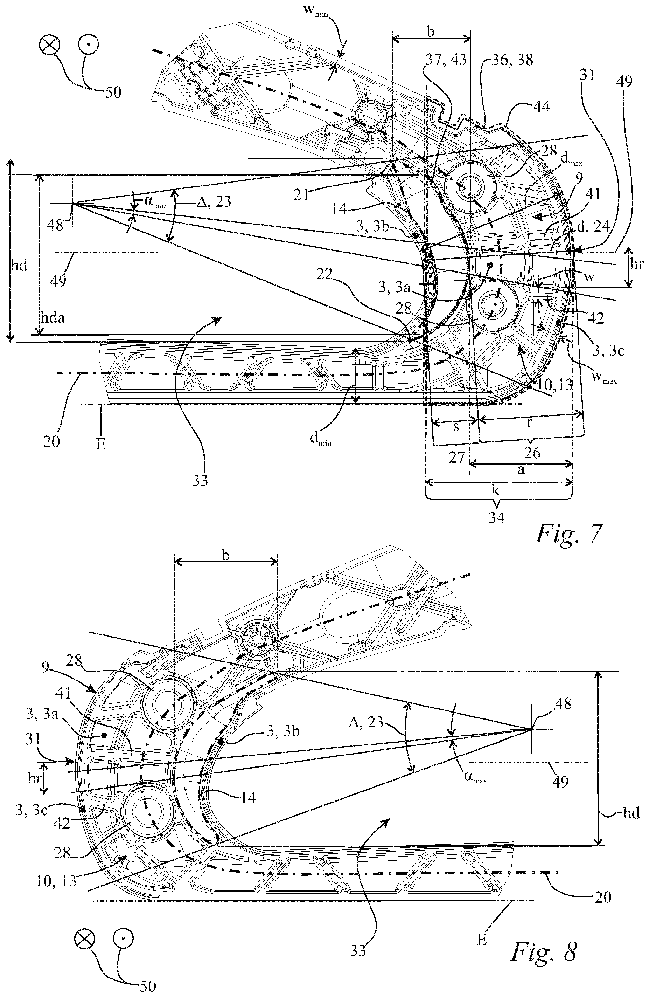

Wie beispielsweise in Fig. 7 dargestellt, umfasst die Rippenstruktur 10 eine Rippe 41 und eine Rippe 42. Die Gehäusewand 3 besitzt in Ansicht in Trennrichtung 50 einen quer zur Trennrichtung 50 verlaufenden Teil 3a. Die Rippe 40, 41 steht in Trennrichtung 50 in Richtung hin zur Innenseite des Gehäuses 40 über die Außenwand 3 hervor. Ausgehend von dem quer zur Trennrichtung 50 verlaufenden Teil 3a der Gehäusewand 3 erstreckt sich die Rippe 41, 42 in Trennrichtung 50 hin zur Innenseite der ersten Gehäuseschale 11. Die erste Gehäuseschale 11 weist eine nicht dargestellte, in Trennrichtung 50 gemessene Schalenhöhe auf. Die Rippe 41, 42 erstreckt sich über 60% bis 90% der Schalenhöhe. Die Außenwand 3 besitzt eine kleinste Wandstärke wₘᵢₙ. Die Rippe 41, 42 besitzt eine Wandstärke wᵣ. Die Wandstärke wᵣ der Rippe 41, 42 beträgt mindestens 120%, insbesondere mindestens 130%, in den Ausführungsbeispielen mindestens 150% der kleinsten Wandstärke wₘᵢₙ der Außenwand 3 des Gehäuses 40.

Wie in Fig. 7 dargestellt, erstreckt sich der rohrartige Abschnitt 9 entlang einer Längsmittelachse 20. Die Längsmittelachse 20 verläuft innerhalb des durch beide Gehäuseschalen 11 und 12 geschlossenen Gehäuses durch die Punkte mit dem größten Abstand zu der Außenwand 3 des Gehäuses 40 im rohrartigen Abschnitt 9.

In Ansicht in Trennrichtung 50 auf die Innenseite der ersten Gehäuseschale 11 besitzt der im Rohrbereich 30 (Fig. 5) angeordnete rohrartige Abschnitt eine Außenkontor, die eine Gesamtfläche begrenzt. Die in Fig. 7 eingezeichnete Außenkontur des Dehnungsbereichs 14 begrenzt in Ansicht in Trennrichtung 50 auf die Innenseite der ersten Gehäuseschale 11 eine Dehnungsfläche. Die Dehnungsfläche beträgt mindestens 10%, in den Ausführungsbeispielen mindestens 15% der Gesamtfläche.

Die Längsmittelachse 20 teilt den rohrartigen Abschnitt 9 in Ansicht in Trennrichtung 50 auf die innenliegende Seite der ersten Gehäuseschale 11 in eine der Grifföffnung 33 zugeordnete Dehnungshälfte 17 und eine dem hinteren Ende 31 des Gehäuses 40 zugeordnete Rippenhälfte 18. Die Dehnungshälfte 17 liegt der Grifföffnung 33 zugewandt. Die Rippenhälfte liegt der Grifföffnung 33 abgewandt. Der zusammenhängende Dehnungsbereich 14 ist vollständig in der Dehnungshälfte 17 angeordnet. Der zusammenhängende Rippenbereich 13 ist sowohl in der Rippenhälfte 18 als auch in der Dehnungshälfte 14 angeordnet.

Der elastische Dehnungsbereich 14 erstreckt sich in Richtung der Längsmittelachse 20 von einem Anfangspunkt 21 bis zu einem Endpunkt 22 in einem Erstreckungsbereich 23. Die Richtung der Längsmittelachse 20 ist gekrümmt. Der Erstreckungsbereich 23 liegt neben der Längsmittelachse 20. Gewissermaßen erstreckt sich der Erstreckungsbereich 23 neben der Längsmittelachse 20 entlang der Längsmittelachse 20. Umgangssprachlich ausgedrückt verläuft der Erstreckungsbereich 23 im Wesentlichen parallel zur Längsmittelachse 20.

Der Erstreckungsbereich 23 des zusammenhängenden Dehnungsbereichs 40 erstreckt sich in einer Ansicht in Trennrichtung 50 auf die Innenseite der ersten Gehäuseschale 11 bezüglich des Flächenschwerpunkts 48 der Grifföffnung 33 in einem zusammenhängenden Winkelbereich Δ von mindestens 30°, insbesondere von mindestens 40°, im Ausführungsbeispiel von mindestens 50°. Der zusammenhängende Winkelbereich Δ ist in Ansicht in Trennrichtung 50 um den Flächenschwerpunkt 48 herum gemessen. Der zusammenhängende Winkelbereich Δ ist in Ansicht in Trennrichtung 50 in einer Umfangsrichtung um den Flächenschwerpunkt 48 herum gemessen. Im zusammenhängenden Winkelbereich Δ ist der Dehnungsbereich 14 der ersten Gehäuseschale 11 frei von der Rippenstruktur 10. Bezüglich der Richtung der Längsmittelachse 20 ist der Dehnungsbereich 14 im zusammenhängenden Winkelbereich Δ frei von jeglicher Rippe. Der zusammenhängenden Winkelbereich Δ öffnet zum hinteren Ende 31 des Gehäuses 40 hin. In einer Ansicht in Trennrichtung 50 auf die Innenseite der ersten Gehäuseschale 11 liegt das hintere Ende 31 des Gehäuses 40 in dem zusammenhängenden Winkelbereich Δ. Bezüglich des Flächenschwerpunkts 48 deckt der zusammenhängende Winkelbereich Δ mindestens einen Winkelbereich von ± 10° um das hintere Ende 31 des Gehäuses 40 herum ab.

Die Rippenstruktur 10 weist mehrere Rippen auf. Zu den mehreren Rippen zählen die Rippen 41 und 42. Unmittelbar benachbarte Rippen 41, 42 der mehreren Rippen weisen zueinander bezüglich des Flächenschwerpunkts 48 der Grifföffnung 33 jeweils einen Nachbarwinkelabstand zueinander auf. Unmittelbar benachbarte Rippen 41, 42 können durch Querrippen miteinander verbunden sein. Dennoch weisen die unmittelbar benachbarten Rippen 41, 42 den Nachbarwinkelabstand zueinander auf. Der Nachbarwinkelabstand ist bezüglich des Flächenschwerpunkts 48 in Umfangsrichtung gemessen. Der größte Nachbarwinkelabstand αₘₐₓ der mehreren Rippen ist kleiner als 50°, im Ausführungsbeispiel kleiner als 20°. Der zusammenhängende Winkelbereich Δ ist größer als der größte Nachbarwinkelabstand αₘₐₓ. Der zusammenhängende Winkelbereich Δ ist insbesondere doppelt so groß, in den Ausführungsbeispielen mindestens dreimal so groß wie der größte Nachbarwinkelabstand αₘₐₓ.

Der rohrartige Abschnitt 9 weist entlang der Längsmittelachse 20 senkrecht zur Längsmittelachse 20 verlaufende Querschnittsflächen 24 auf. Die Außenwand 3 besitzt in Ansicht in Trennrichtung 50 auf die Innenseite der ersten Gehäuseschale 11 einen Teil 3b. Der Teil 3b der Außenwand 3 begrenzt die Grifföffnung 33, insbesondere in Ansicht in Trennrichtung 50 auf die Innenseite der ersten Gehäuseschale 11. Die Außenwand 3 weist in Ansicht in Trennrichtung 50 auf die erste Gehäuseschale 11 einen Teil 3c auf. Der Teil 3c der Außenwand 3 ist in Ansicht in Trennrichtung 50 auf die Innenseite der ersten Gehäuseschale 11 der Grifföffnung 33 abgewandt. Insbesondere bildet der Teil 3c der Außenwand 3 das hintere Ende 33 des Gehäuses 40. Die senkrecht zur Längsmittelachse 20 verlaufenden Querschnittsflächen 22 besitzen in Ansicht in Trennrichtung 50 jeweils einen von der Außenseite des Teils 3b der Außenwand 3 zu der Außenseite des Teils 3c der Außenwand 3 gemessenen Durchmesser. Der Durchmesser verläuft senkrecht zur Trennrichtung 50. Der durch das hintere Ende 31 des Gehäuses 41 verlaufende Durchmesser der zugehörigen Querschnittsfläche 24 wird als Enddurchmesser d bezeichnet.

Die Teile 3a, 3b und 3c der Außenwand 3 sind einteilig miteinander ausgebildet. Die Teile 3a, 3b und 3c der Außenwand 3 sind in einem einzigen Spritzgussverfahrensschritt gemeinsam hergestellt.

Der Teil des Enddurchmessers d, der im Rippenbereich 13 liegt, wird als Rippenteilabschnitt 26 bezeichnet. Der Rippenteilabschnitt 26 besitzt eine entlang des Enddurchmessers d gemessene Länge r. Die Länge r des Rippenteilabschnitts 26 beträgt weniger als 80% des Enddurchmessers.

Der Teil des Enddurchmessers d, der im Dehnungsbereich 14 liegt, wird als Dehnungsteilabschnitt 27 bezeichnet. Der Dehnungsteilabschnitt 27 besitzt eine entlang des Enddurchmessers d gemessene Länge s. Die Länge s des Dehnungsteilabschnitts 27 beträgt mehr als 20% des Enddurchmessers d. Ein maximaler Durchmesser dₘₐₓ aller Querschnittsflächen 24 beträgt mindestens 120%, insbesondere mindestens 130%, in den Ausführungsbeispielen mindestens 140% eines minimalen Durchmessers dₘᵢₙ aller Querschnittsflächen 24. Die Querschnittsfläche 24 mit dem maximalen Durchmesser dₘₐₓ schneidet den Dehnungsbereich 14, insbesondere in Ansicht in Trennrichtung 50.

Der Teil 3c der Außenwand 3 besitzt eine in Fig. 7 dargestellte maximale Wandstärke wₘₐₓ. Die maximale Wandstärke wₘₐₓ beträgt mindestens 120%, in den Ausführungsbeispielen mindestens 130% der kleinsten Wandstärke wₘᵢₙ der Außenwand 3 des Gehäuses 40. Der Teil 3c der Außenwand 3 weist die maximale Wandstärke wₘₐₓ in Ansicht in Trennrichtung 50 im zusammenhängenden Winkelbereich Δ auf.

Der Dehnungsbereich 14 besitzt eine in der Abstellposition senkrecht zur Horizontalebene E gemessene maximale Dehnungshöhe hd. Die maximale Dehnungshöhe hd ist in Fig. 7 dargestellt. Die Grifföffnung 33 besitzt eine in der Abstellposition senkrecht zu der Horizontalebene E gemessene maximale Öffnungshöhe ho. Die maximale Öffnungshöhe ho der Grifföffnung 33 ist in Fig. 5 dargestellt. Die maximale Dehnungshöhe hd beträgt mindestens 50%, insbesondere mindestens 60%, im Ausführungsbeispiel mindestens 70% der maximalen Öffnungshöhe ho.

Die mehreren Rippen des Rippenbereichs 13 besitzen einen in der Abstellposition in Richtung senkrecht zur Horizontalebene E gemessenen maximalen Rippenabstand hr. Der maximale Rippenabstand hr ist in Fig. 7 eingezeichnet. Der maximale Rippenabstand hr ist kleiner als 40%, insbesondere kleiner als 30%, im Ausführungsbeispiel kleiner als 20% der maximalen Öffnungshöhe ho der Grifföffnung 33.

Die Länge s des Dehnungsteilabschnitts 27 des Enddurchmessers d beträgt mindestens 5%, im Ausführungsbeispiel mindestens 10% der maximalen Öffnungshöhe ho der Grifföffnung 33.

Der Dehnungsbereich 14 besitzt eine in Richtung der Längsachse 49 gemessene Breite b. Die Breite b ist in Fig. 7 eingezeichnet. Die Breite b des Dehnungsbereichs 14 beträgt mindestens 10%, in den Ausführungsbeispielen mindestens 20% der maximalen Öffnungshöhe ho der Grifföffnung 33.

Vorzugsweise besitzt der Dehnungsbereich 14 in Ansicht in Trennrichtung 50 auf die Innenseite der ersten Gehäuseschale 11 eine gekrümmte Form, wie in Fig. 7 dargestellt. Die Krümmung des Dehnungsbereichs 14 folgt im Wesentlichen der Krümmung der Längsmittelachse 20 des rohrartigen Abschnitts 9.

In Ansicht in Trennrichtung 50 auf die innenliegende Seite der ersten Gehäuseschale 11 ist der Rippenbereich 13 unmittelbar benachbart zu der das hintere Ende 31 des Gehäuses 40 bildenden Außenwand 3 angeordnet. Wie in Fig. 7 dargestellt, ist in Ansicht in Trennrichtung 50 auf die innenliegenden Seite der ersten Gehäuseschale 11 der Rippenbereich 13 unmittelbar benachbart zu dem Teil 3c der Außenwand 3 des Gehäuses 40 angeordnet. In Ansicht in Trennrichtung 50 auf die innenliegende Seite der ersten Gehäuseschale 11 ist der Dehnungsbereich 40 unmittelbar benachbart zu der die Grifföffnung 33 begrenzenden Außenwand 3 angeordnet. In Ansicht in Trennrichtung 50 auf die innenliegende Seite der ersten Gehäuseschale 11 ist der Dehnungsbereich 40 unmittelbar benachbart zu dem Teil 3b der Außenwand 3 angeordnet.

Die erste Gehäuseschale 11 umfasst in Ansicht in Trennrichtung 50 auf die innenliegende Seite der ersten Gehäuseschale 11 einen Krümmungsabschnitt 34. Der Krümmungsabschnitts 34 weist einen zusammenhängenden starren Rippenabschnitt 36 auf. In dem Rippenabschnitt 36 sind Rippen 41, 42 der Rippenstruktur 10 angeordnet. Der Krümmungsabschnitt 34 weist einen zusammenhängenden elastischen Dehnungsabschnitt 37 auf. Der elastische Dehnungsabschnitt 37 dient zur elastischen Aufnahme von bei einem Aufprall des Arbeitsgeräts 1 freiwerdender Energie.

Der Dehnungsabschnitt 37 grenzt unmittelbar an den Rippenabschnitt 36 an. Der Dehnungsabschnitt 37 weist zum hinteren Ende 31 des Gehäuses 40 einen größeren Abstand a auf als der Rippenabschnitt 36.

In Ansicht in Trennrichtung 50 auf die innenliegende Seite der ersten Gehäuseschale 11 weist der Rippenabschnitt 36 eine in Fig. 7 schematisch gestrichelt dargestellte Rippenaußenkontur 38 auf. Die Rippenaußenkontur 38 begrenzt eine Rippenfläche. Rippen 41, 42 der Rippenstruktur 10 sind innerhalb der Rippenaußenkontur 38 angeordnet. Auf der dem hinteren Ende 31 abgewandten Seite der Rippenaußenkontur 38 ist die Rippenaußenkontur 38 durch eine Senkrechte zur Längsachse 49 durch den Anfangspunkt A der Grifföffnung 33 begrenzt. In den Ausführungsbeispielen ist der restliche Teil der Rippenaußenkontur 38 durch einen Teil der Außenkontur des Gehäuses 40 in Ansicht in Trennrichtung 50 auf die innenliegende Seite der ersten Gehäuseschale 11 gebildet.

In Ansicht in Trennrichtung 50 auf die innenliegende Seite der ersten Gehäuseschale 11 weist der Dehnungsabschnitt 37 eine in Fig. 7 schematisch gestrichelt dargestellte Dehnungsaußenkontur 43 auf. Die Dehnungsaußenkontur 43 begrenzt eine Dehnungsabschnittsfläche. Auf der dem hinteren Ende 31 abgewandten Seite der Dehnungsaußenkontur 43 ist die Dehnungsaußenkontur 43 durch eine Senkrechte zur Längsachse 49 durch den Anfangspunkt A der Grifföffnung 33 begrenzt. In den Ausführungsbeispielen ist der restliche Teil der Dehnungsaußenkontur 43 durch den dem hinteren Ende 31 des Gehäuses 40 zugewandten Teil der Außenkontur des Dehnungsbereichs 14 gebildet.

In Ansicht in Trennrichtung 50 auf die innenliegende Seite der ersten Gehäuseschale 11 beträgt der mit Rippen 41, 42 bedeckte Flächenanteil innerhalb der Rippenaußenkontur 38 mindestens 30%, insbesondere mindestens 35% der Rippenfläche.

In Ansicht in Trennrichtung 50 auf die innenliegende Seite der ersten Gehäuseschale 11 beträgt der mit Rippen 41, 42 bedeckte Flächenanteil innerhalb der Dehnungsaußenkontur 43 weniger als 10%, insbesondere weniger als 5%, in den Ausführungsbeispielen 0% der Dehnungsabschnittsfläche.

Der Krümmungsabschnitt 34 weist in Ansicht in Trennrichtung 50 auf die innenliegende Seite der ersten Gehäuseschale 11 eine Gesamtaußenkontur 44 mit einer Krümmungsfläche auf. Die Dehnungsabschnittsfläche beträgt mindestens 20% der Krümmungsfläche.

Die Rippenfläche beträgt höchstens 85%, insbesondere höchstens 80%, in den Ausführungsbeispielen höchstens 75% der Krümmungsfläche.

Der Rippenabschnitt 36 ist in Ansicht in Trennrichtung 50 auf die innenliegende Seite der ersten Gehäuseschale 11 unmittelbar benachbart zu der das hintere Ende 31 des Gehäuses 40 bildenden Außenwand 3 angeordnet. Der Dehnungsabschnitt 37 ist in Ansicht in Trennrichtung 50 auf die innenliegende Seite der ersten Gehäuseschale 11 unmittelbar benachbart zu der die Grifföffnung 33 begrenzenden Außenwand 3 angeordnet.

Der Dehnungsabschnitt 37 erstreckt sich bezüglich der Richtung der Längsachse 49 über mindestens 10%, in den Ausführungsbeispielen über mindestens 20% der Längserstreckung des Krümmungsabschnitts 34 in Richtung der Längsachse 49 des Gehäuses 40.

Der Rippenabschnitt 36 erstreckt sich bezüglich der Richtung der Längsachse 49 über höchstens 90%, in den Ausführungsbeispielen über höchstens 75% der Längserstreckung des Krümmungsabschnitts 34 in Richtung der Längsachse 49 des Gehäuses 40.

Der Dehnungsabschnitt 37 besitzt eine in der Abstellposition senkrecht zur Horizontalebene E gemessene maximale Dehnungsabschnittshöhe hda. Die maximale Dehnungsabschnittshöhe hda ist in Fig. 7 dargestellt. Die maximale Dehnungsabschnittshöhe hda beträgt mindestens 50%, insbesondere mindestens 60%, im Ausführungsbeispiel mindestens 70% der in Fig. 5 dargestellten maximalen Öffnungshöhe ho.

Die erste Gehäuseschale 11 weist ein Verbindungselement 28 auf. Das Verbindungselement 28 wird auch als Verbindungsstruktur bezeichnet. Das Verbindungselement 28 dient zur Verbindung der ersten Gehäuseschale 11 mit der zweiten Gehäuseschale 12. Im Ausführungsbeispiel ist das Verbindungselement 28 ein Schraubdom. Es kann aber auch vorgesehen sein, dass die erste Gehäuseschale 11 mit der zweiten Gehäuseschale 12 mittels einer Rast- oder Clipsverbindung verbindbar ist. Ebenfalls kann vorgesehen sein, dass die erste Gehäuseschale 11 mit der zweiten Gehäuseschale 12 mittels eines Niets verbindbar ist. Mehrere Rippen, in Fig. 7 beispielsweise die Rippe 42 der Rippenstruktur 10, sind so mit dem Verbindungselement 28 verbunden und so in der ersten Gehäuseschale 11 angeordnet, dass sie Kraft in das Verbindungselement 28 einleiten können. Die Rippe 42 verläuft von dem Teil 3c der Außenwand 3 hin zu dem Verbindungselement 28, wie in Fig. 7 dargestellt. Dadurch kann die Rippe 42 beim Aufprall des Arbeitsgeräts 1 Energie von dem außenliegenden Teil 3c der Außenwand 3 hin zu dem als Schraubdom ausgebildeten Verbindungselement 28 leiten. Das Verbindungselement 28 ist in Ansicht in Trennrichtung auf die Innenseite der ersten Gehäuseschale 11 im Rippenbereich 13 angeordnet.

Die erste Gehäuseschale 11 ist über das Verbindungselement 28 so mit der zweiten Gehäuseschale 12 verbunden, dass das Verbindungselement 28 die bei einem Aufprall des Arbeitsgeräts 1 freigesetzte Energie von der ersten Gehäuseschale 11 über das Verbindungselement 28 auf die zweite Gehäuseschale 12 übertragen werden kann.

Wie in den Fig. 6 und 8 dargestellt, ist die zweite Gehäuseschale 12 analog zur ersten Gehäuseschale 11 ausgebildet. Dementsprechend sind für die Fig. 6 und 8 dieselben Bezugszeichen wie für die Fig. 5 und 7 verwendet. Die Beschreibung zu den Fig. 5 und 7 und auch die übrige Beschreibung trifft auch auf die Fig. 6 und 8 zu. Insbesondere weist auch die zweite Gehäuseschale 12 einen Dehnungsbereich 14 und einen Rippenbereich 13 auf. Die beiden Dehnungsbereiche 14 der ersten und der zweiten Gehäuseschale 11 und 12 korrespondieren miteinander und bilden im zusammengebauten Zustand des Gehäuses 40 gemeinsam einen einzigen großen Dehnungsbereich. Auch die Verbindungselemente 28 der ersten und der zweiten Gehäuseschale 11 und 12 korrespondieren miteinander. Insbesondere weist auch die zweite Gehäuseschale 12 einen Dehnungsabschnitt 37 und einen Rippenabschnitt 36 auf. Die beiden Dehnungsabschnitte 37 der ersten und der zweiten Gehäuseschale 11 und 12 korrespondieren miteinander und bilden im zusammengebauten Zustand des Gehäuses 40 gemeinsam einen einzigen großen Dehnungsabschnitt.

In Fig. 8 sind aus Gründen der Übersichtlichkeit nicht alle in Fig. 7 verwendeten Bezugszeichen und Größen eingezeichnet. Dennoch weist die zweite Gehäuseschale 12 auch die entsprechenden Größen und Merkmale auf. Die Beschreibung zur ersten Gehäuseschale 11 trifft in analoger Weise vollumfänglich auf die zweite Gehäuseschale 12 zu.

Auch die zweite Gehäuseschale 12 weist einen Rippenbereich 13 und/oder einen Rippenabschnitt 36 und einen Dehnungsbereich 14 und/oder einen Dehnungsabschnitt 37 auf.

Auch die zweite Gehäuseschale 12 weist ein Verbindungselement 28 auf. Auch das Verbindungselement 28 der zweiten Gehäuseschale 12 kann als Verbindungsstruktur bezeichnet werden. Zweckmäßig ist das Verbindungselement 28 der zweiten Gehäuseschale 12 im Rippenbereich 13 und/oder im Rippenabschnitt 36 der zweiten Gehäuseschale 12 angeordnet.

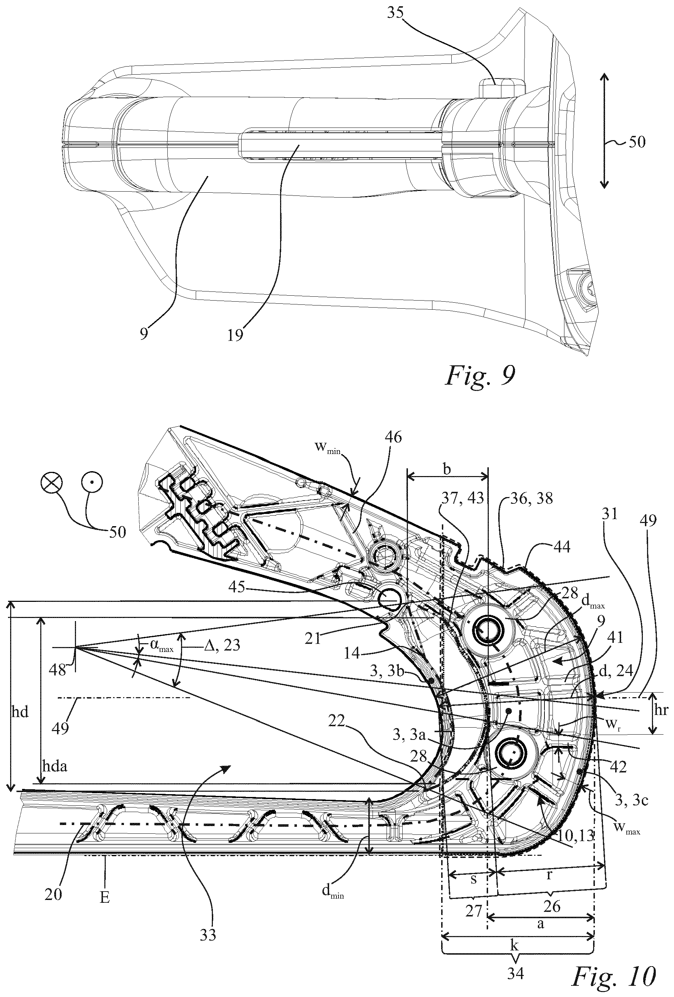

Wie in den Fig. 1 und 9 dargestellt, weist das Arbeitsgerät 1 ein weiteres Bedienelement 19 auf. Das Arbeitsgerät 1 weist ein beispielhaft für alle Ausführungsbeispiele in Fig. 9 dargestelltes Sperrelement 35 auf. Das Sperrelement 35 dient zur Sperrung des Bedienelements 15 zur Bedienung des Elektromotors 4. Das Arbeitsgerät 1 ist vorteilhaft so ausgelegt, dass das Bedienelement 15 nur betätigt werden kann, wenn das Sperrelement 35 in einer Entsperrposition ist. Das Sperrelement 35 kann vom Bediener in die Entsperrposition gedrückt werden. Hierbei muss eine Federkraft überwunden werden. Damit der Bediener das Sperrelement 35 nicht permanent in die Entsperrposition gedrückt halten muss, ist das weitere Bedienelement 19 vorgesehen. Das weitere Bedienelement 19 ist in den Ausführungsbeispielen ein Halteelement. Mit dem Halteelement kann das Sperrelement 35 komfortabel in der Entsperrposition gehalten werden. Bei betätigtem Halteelement ist ein Drücken des Sperrelements 35 in die Entsperrposition nicht mehr dauerhaft, sondern nur initial erforderlich. Nach initialem Drücken des Sperrelements 35 in die Entsperrposition kann das Sperrelement 35 mittels (permanenter) Betätigung des Halteelements in der Entsperrposition, vorzugsweise mechanisch, gehalten werden. Das Halteelement ist als Hebel ausgebildet.

Das Sperrelement 35 steht in Trennrichtung 50 über die Gehäusewand 3 hervor (Fig. 9). Vorzugsweise steht das weitere Bedienelement 19 in der Abstellposition in Richtung weg von der Horizontalebene E aus dem Bedienbereich 2 des Gehäuses 40 hervor (Fig. 1). Das weitere Bedienelement 19 ist im Bedienbereich 2 des Gehäuses 40 angeordnet (Fig. 1).

Anstatt mechanischer Bedienelemente kann auch ein elektronisches Bediensystem vorgesehen sein.

## Patentansprüche

1. Handgeführtes Arbeitsgerät umfassend ein Gehäuse (40) und ein daran angeordnetes Werkzeug (39), wobei das Gehäuse (40) ein hinteres Ende (31) aufweist, dem ein Bedienbereich (2) des Gehäuses (40) zugeordnet ist, wobei das Gehäuse (40) ein vorderes Ende (32) aufweist, an dem das Werkzeug (39) angeordnet ist, wobei das Gehäuse (40) eine erste Gehäuseschale (11) und eine zweite Gehäuseschale (12) aufweist, die beim Zusammenbau des Gehäuses (40) in einer Trennrichtung (50) trennbar und zusammensetzbar sind, wobei das Gehäuse (40) eine Außenwand (3) aufweist, wobei der Bedienbereich (2) eine das Gehäuse (40) in Trennrichtung (50) vollständig durchdringende Grifföffnung (33) aufweist, die im Bereich des hinteren Endes (31) des Gehäuses (40) von einem rohrartigen Abschnitt (9) der Außenwand (3) des Gehäuses (40) begrenzt ist, wobei die Außenwand (3) der ersten Gehäuseschale (11) im Bereich des rohrartigen Abschnitts (9) durch eine im Gehäuse (40) innenliegende Rippenstruktur (10) verstärkt ist,
**dadurch gekennzeichnet, dass** die erste Gehäuseschale (11) in Ansicht in Trennrichtung (50) auf die innenliegende Seite der ersten Gehäuseschale (11) im Bereich des rohrartigen Abschnitts (9) aufweist:
- einen zusammenhängenden starren Rippenbereich (13), in dem die Rippenstruktur (10) angeordnet ist, und
- einen zusammenhängenden elastischen Dehnungsbereich (14) zur elastischen Aufnahme von bei einem Aufprall des Arbeitsgeräts (1) freiwerdender Energie,
dass der Dehnungsbereich (14) unmittelbar an den Rippenbereich (13) angrenzt und einen größeren Abstand (a) zum hinteren Ende (31) des Gehäuses (40) aufweist als der Rippenbereich (13), und dass der Dehnungsbereich (14) im Wesentlichen, insbesondere vollständig frei von der Rippenstruktur (10) ist.

2. Arbeitsgerät nach Anspruch 1,
**dadurch gekennzeichnet, dass** sich der rohrartige Abschnitt (9) entlang einer Längsmittelachse (20) erstreckt, dass die Längsmittelachse (20) den rohrartigen Abschnitt (9) in Ansicht in Trennrichtung (50) auf die innenliegende Seite der ersten Gehäuseschale (11) in eine der Grifföffnung (33) zugeordnete Dehnungshälfte (17) und eine dem hinteren Ende (31) zugeordnete Rippenhälfte (18) teilt, und insbesondere dass der zusammenhängende Dehnungsbereich (14) vollständig in der Dehnungshälfte (17) angeordnet ist.

3. Arbeitsgerät nach Anspruch 2,
**dadurch gekennzeichnet, dass** der zusammenhängende Rippenbereich (13) sowohl in der Rippenhälfte (18) als auch in der Dehnungshälfte (17) angeordnet ist.

4. Arbeitsgerät nach Anspruch 2 oder 3,
**dadurch gekennzeichnet, dass** sich der Dehnungsbereich (14) in Richtung der Längsmittelachse (20) von einem Anfangspunkt (21) bis zu einem Endpunkt (22) in einem Erstreckungsbereich (23) erstreckt, dass die Grifföffnung (33) in Ansicht in Trennrichtung (50) auf das Gehäuse (40) einen Flächenschwerpunkt (48) besitzt, und dass sich der Erstreckungsbereich (23) des zusammenhängenden Dehnungsbereichs (14) in dieser Ansicht bezüglich des Flächenschwerpunkts (48) in einem zusammenhängenden Winkelbereich (Δ) von mindestens 30°, insbesondere von mindestens 40°, bevorzugt von mindestens 50° erstreckt.

5. Arbeitsgerät nach Anspruch 4,
**dadurch gekennzeichnet, dass** die Rippenstruktur (10) mehrere Rippen (41, 42) aufweist, dass unmittelbar benachbarte Rippen (41, 42) bezüglich des Flächenschwerpunkts (48) der Grifföffnung (33) jeweils einen Nachbarwinkelabstand zueinander aufweisen, und dass der größte Nachbarwinkelabstand (αₘₐₓ) der mehreren Rippen kleiner als 25°, insbesondere kleiner als 20° ist.

6. Arbeitsgerät nach einem der Ansprüche 1 bis 5,
**dadurch gekennzeichnet, dass** das Arbeitsgerät (1) so ausgelegt ist, dass es in einer dafür vorgesehenen Abstellposition auf einer Horizontalebene (E) abstellbar ist, dass der Dehnungsbereich (14) eine in der Abstellposition senkrecht zur Horizontalebene (E) gemessene maximale Dehnungshöhe (hd) besitzt, dass die Grifföffnung (33) eine in der Abstellposition senkrecht zu der Horizontalebene (E) gemessene maximale Öffnungshöhe (ho) besitzt, und dass die maximale Dehnungshöhe (hd) mindestens 50%, insbesondere mindestens 60%, bevorzugt mindestens 70% der maximalen Öffnungshöhe (ho) beträgt.

7. Arbeitsgerät nach einem der Ansprüche 1 bis 6,
**dadurch gekennzeichnet, dass** der Rippenbereich (13) in Ansicht in Trennrichtung (50) auf die innenliegende Seite der ersten Gehäuseschale (11) unmittelbar benachbart zu der das hinteren Ende (31) des Gehäuses (40) bildenden Außenwand (3) angeordnet ist, und dass der Dehnungsbereich (14) in Ansicht in Trennrichtung (50) auf die innenliegende Seite der ersten Gehäuseschale (11) unmittelbar benachbart zu der die Grifföffnung (33) begrenzenden Außenwand (3) angeordnet ist.

8. Arbeitsgerät nach einem der Ansprüche 1 bis 7,
**dadurch gekennzeichnet, dass** die erste Gehäuseschale (11) ein Verbindungselement (28) oder eine Verbindungsstruktur, insbesondere einen Schraubdom, zur Verbindung der ersten Gehäuseschale (11) mit der zweiten Gehäuseschale (12) aufweist, und dass mehrere Rippen (42) der Rippenstruktur (10) so mit dem Verbindungselement (28) verbunden und so in der ersten Gehäuseschale (11) angeordnet sind, dass sie Kraft in das Verbindungselement (28) einleiten können, und insbesondere dass das Verbindungselement (28) oder die Verbindungsstruktur im Rippenbereich (13) angeordnet ist.

9. Arbeitsgerät nach einem der Ansprüche 1 bis 8,
**dadurch gekennzeichnet, dass** die erste Gehäuseschale (11) und die zweite Gehäuseschale (12) vollständig aus glasfaserverstärktem Kunststoff, insbesondere aus Polyamid 6 (PA6) mit einem Glasfaseranteil von 15% (PA6GF15), bevorzugt von 30% (PA6GF30), bestehen, wobei das Polyamid 6 (PA6) insbesondere schlagzäh modifiziert ist.

10. Handgeführtes Arbeitsgerät umfassend ein Gehäuse (40) und ein daran angeordnetes Werkzeug (39), wobei das Gehäuse (40) ein hinteres Ende (31) aufweist, dem ein Bedienbereich (2) des Gehäuses (40) zugeordnet ist, wobei das Gehäuse (40) ein vorderes Ende (32) aufweist, an dem das Werkzeug (39) angeordnet ist, wobei sich das Gehäuse (40) entlang einer Längsachse (49) von dem hinteren Ende (31) zu dem vorderen Ende (32) erstreckt, wobei das Gehäuse (40) eine erste Gehäuseschale (11) und eine zweite Gehäuseschale (12) aufweist, die beim Zusammenbau des Gehäuses (40) in einer Trennrichtung (50) trennbar und zusammensetzbar sind, wobei das Gehäuse (40) eine Außenwand (3) aufweist, wobei der Bedienbereich (2) eine das Gehäuse (40) in Trennrichtung (50) vollständig durchdringende Grifföffnung (33) aufweist, wobei die Grifföffnung (33) einen Anfangspunkt (A) aufweist, wobei der Anfangspunkt (A) in Ansicht in Trennrichtung (50) auf die innenliegende Seite der ersten Gehäuseschale (11) zu dem hinteren Ende (31) des Gehäuses (40) den in Richtung der Längsachse (49) gemessenen kleinsten Abstand (k) aufweist, wobei das Gehäuse (40) einen Krümmungsabschnitt (34) aufweist, der sich in Richtung der Längsachse (49) von dem hinteren Ende (31) zu dem Anfangspunkt (A) erstreckt, wobei die Außenwand (3) der erste Gehäuseschale (11) im Bereich des Krümmungsabschnitts (34) durch eine im Gehäuse (40) innenliegende Rippenstruktur (10) verstärkt ist,
**dadurch gekennzeichnet, dass** die erste Gehäuseschale (11) in Ansicht in Trennrichtung (50) auf die innenliegende Seite der ersten Gehäuseschale (11) im Krümmungsabschnitt (34) aufweist:
- einen zusammenhängenden starren Rippenabschnitt (36), in dem Rippen (41, 42) der Rippenstruktur (10) angeordnet sind, und
- einen zusammenhängenden elastischen Dehnungsabschnitt (37) zur elastischen Aufnahme von bei einem Aufprall des Arbeitsgeräts (1) freiwerdender Energie,
dass der Dehnungsabschnitt (37) unmittelbar an den Rippenabschnitt (36) angrenzt und einen größeren Abstand (a) zum hinteren Ende (31) des Gehäuses (40) aufweist als der Rippenabschnitt (36), dass in Ansicht in Trennrichtung (50) auf die innenliegende Seite der ersten Gehäuseschale (11):
- der Rippenabschnitt (36) eine Rippenaußenkontur (38) mit einer Rippenfläche aufweist,
- der Dehnungsabschnitt (37) eine Dehnungsaußenkontur (43) mit einer Dehnungsabschnittsfläche aufweist,
- der mit Rippen (41, 42) bedeckte Flächenanteil innerhalb der Rippenaußenkontur (38) mindestens 30%, insbesondere mindestens 35% der Rippenfläche beträgt und
- der mit Rippen bedeckte Flächenanteil innerhalb der Dehnungsaußenkontur (43) weniger als 10%, insbesondere weniger als 5%, bevorzugt 0% der Dehnungsabschnittsfläche beträgt.

11. Arbeitsgerät nach Anspruch 10,
**dadurch gekennzeichnet, dass** der Krümmungsabschnitt (34) in Ansicht in Trennrichtung (50) auf die innenliegende Seite der ersten Gehäuseschale (11) eine Gesamtaußenkontur (44) mit einer Krümmungsfläche aufweist, und dass die Dehnungsabschnittsfläche mindestens 20% der Krümmungsfläche beträgt.

12. Arbeitsgerät nach Anspruch 10 oder 11,
**dadurch gekennzeichnet, dass** der Rippenabschnitt (36) in Ansicht in Trennrichtung (50) auf die innenliegende Seite der ersten Gehäuseschale (11) unmittelbar benachbart zu der das hintere Ende (31) des Gehäuses (40) bildenden Außenwand (3) angeordnet ist, und dass der Dehnungsabschnitt (37) in Ansicht in Trennrichtung (50) auf die innenliegende Seite der ersten Gehäuseschale (11) unmittelbar benachbart zu der die Grifföffnung (33) begrenzenden Außenwand (3) angeordnet ist.

13. Arbeitsgerät nach einem der Ansprüche 1 bis 12,
**dadurch gekennzeichnet, dass** die zweite Gehäuseschale (12) bezüglich der Rippenstruktur (10) und des Dehnungsbereichs (14), bzw. des Dehnungsabschnitts (37) analog zur ersten Gehäuseschale (11) ausgebildet ist.

14. Arbeitsgerät nach einem der Ansprüche 1 bis 12,
**dadurch gekennzeichnet, dass** auch die zweite Gehäuseschale (12) einen Rippenbereich (13) und/oder einen Rippenabschnitt (36) und einen Dehnungsbereich (14) und/oder einen Dehnungsabschnitt (37) aufweist.

15. Arbeitsgerät nach Anspruch 13 oder 14,
**dadurch gekennzeichnet, dass** auch die zweite Gehäuseschale (12) ein Verbindungselement (28) oder eine Verbindungsstruktur aufweist, und dass das Verbindungselement (28) oder die Verbindungsstruktur der zweiten Gehäuseschale (12) im Rippenbereich (13) der zweiten Gehäuseschale (12) angeordnet ist.

## Claims

1. Hand-held work apparatus comprising a housing (40) and a tool (39) arranged thereon, wherein the housing (40) has a rear end (31) with which an operating region (2) of the housing (40) is associated, wherein the housing (40) has a front end (32) on which the tool (39) is arranged, wherein the housing (40) has a first housing shell (11) and a second housing shell (12), which can be separated in a separation direction (50) and assembled during assembly of the housing (40), wherein the housing (40) has an outer wall (3), wherein the operating region (2) has a handle opening (33) that completely penetrates the housing (40) in the separation direction (50) and is delimited, in the region of the rear end (31) of the housing (40), by a tubular portion (9) of the outer wall (3) of the housing (40), wherein the outer wall (3) of the first housing shell (11) is reinforced in the region of the tubular portion (9) by a rib structure (10) inside the housing (40), **characterized in that**, in a view of the inner side of the first housing shell (11) in the separation direction (50), the first housing shell (11) has, in the region of the tubular portion (9):
- a continuous rigid rib region (13), in which the rib structure (10) is arranged, and
- a continuous elastic expansion region (14) for the elastic absorption of energy released in the event of an impact of the work apparatus (1),
**in that** the expansion region (14) is directly adjacent to the rib region (13) and has a greater distance (a) from the rear end (31) of the housing (40) than the rib region (13), and **in that** the expansion region (14) is substantially, in particular completely, free of the rib structure (10).

2. Work apparatus according to Claim 1,
**characterized in that** the tubular portion (9) extends along a longitudinal centre axis (20), **in that**, in a view of the inner side of the first housing shell (11) in the separation direction (50), the longitudinal centre axis (20) divides the tubular portion (9) into an expansion half (17) associated with the handle opening (33) and a rib half (18) associated with the rear end (31), and in particular **in that** the continuous expansion region (14) is completely arranged in the expansion half (17).

3. Work apparatus according to Claim 2,
**characterized in that** the continuous rib region (13) is arranged both in the rib half (18) and in the expansion half (17).

4. Work apparatus according to Claim 2 or 3,
**characterized in that** the expansion region (14) extends in the direction of the longitudinal centre axis (20) from a starting point (21) to an end point (22) in an extension region (23), **in that**, when the housing (40) is viewed in the separation direction (50), the handle opening (33) has a centroid (48), and **in that**, in this view, the extension region (23) of the continuous expansion region (14) extends in a continuous angular range (Δ) of at least 30°, in particular of at least 40°, preferably of at least 50°, with respect to the centroid (48).

5. Work apparatus according to Claim 4,
**characterized in that** the rib structure (10) has a plurality of ribs (41, 42), **in that** directly adjacent ribs (41, 42) each have an adjacent angular distance from one another with respect to the centroid (48) of the handle opening (33), and **in that** the largest adjacent angular distance (αₘₐₓ) of the plurality of ribs is less than 25°, in particular less than 20°.

6. Work apparatus according to one of Claims 1 to 5,
**characterized in that** the work apparatus (1) is configured such that it can be set down in a set-down position provided therefor on a horizontal plane (E), **in that** the expansion region (14) has a maximum expansion height (hd) measured perpendicular to the horizontal plane (E) in the set-down position, **in that** the handle opening (33) has a maximum opening height (ho) measured perpendicular to the horizontal plane (E) in the set-down position, and **in that** the maximum expansion height (hd) is at least 50%, in particular at least 60%, preferably at least 70%, of the maximum opening height (ho).

7. Work apparatus according to one of Claims 1 to 6,
**characterized in that**, in a view of the inner side of the first housing shell (11) in the separation direction (50), the rib region (13) is arranged directly adjacent to the outer wall (3) forming the rear end (31) of the housing (40), and **in that**, in a view of the inner side of the first housing shell (11) in the separation direction (50), the expansion region (14) is arranged directly adjacent to the outer wall (3) delimiting the handle opening (33).

8. Work apparatus according to one of Claims 1 to 7,
**characterized in that** the first housing shell (11) has a connecting element (28) or a connecting structure, in particular a screw boss, for connecting the first housing shell (11) to the second housing shell (12), and **in that** a plurality of ribs (42) of the rib structure (10) are connected to the connecting element (28) and arranged in the first housing shell (11) such that they can introduce force into the connecting element (28), and in particular **in that** the connecting element (28) or the connecting structure is arranged in the rib region (13).

9. Work apparatus according to one of Claims 1 to 8,
**characterized in that** the first housing shell (11) and the second housing shell (12) consist entirely of glass-fibre-reinforced plastic, in particular of polyamide 6 (PA6) having a glass fibre content of 15% (PA6GF15), preferably of 30% (PA6GF30), wherein the polyamide 6 (PA6) is impact-modified in particular.

10. Hand-held work apparatus comprising a housing (40) and a tool (39) arranged thereon, wherein the housing (40) has a rear end (31) to which an operating region (2) of the housing (40) is assigned, wherein the housing (40) has a front end (32) on which the tool (39) is arranged, wherein the housing (40) extends along a longitudinal axis (49) from the rear end (31) to the front end (32), wherein the housing (40) has a first housing shell (11) and a second housing shell (12), which can be separated in a separation direction (50) and assembled during assembly of the housing (40), wherein the housing (40) has an outer wall (3), wherein the operating region (2) has a handle opening (33) that completely penetrates the housing (40) in the separation direction (50), wherein the handle opening (33) has a starting point (A), wherein, in a view of the inner side of the first housing shell (11) in the separation direction (50), the starting point (A) has the smallest distance (k), measured in the direction of the longitudinal axis (49), from the rear end (31) of the housing (40), wherein the housing (40) has a curvature portion (34), which extends in the direction of the longitudinal axis (49) from the rear end (31) to the starting point (A), wherein the outer wall (3) of the first housing shell (11) is reinforced in the region of the curvature portion (34) by a rib structure (10) inside the housing (40),
**characterized in that**, in a view of the inner side of the first housing shell (11) in the separation direction (50), the first housing shell (11) has, in the curvature portion (34):
- a continuous rigid rib portion (36), in which ribs (41, 42) of the rib structure (10) are arranged, and
- a continuous elastic expansion portion (37) for the elastic absorption of energy released in the event of an impact of the work apparatus (1),
**in that** the expansion portion (37) is directly adjacent to the rib portion (36) and has a greater distance (a) from the rear end (31) of the housing (40) than the rib portion (36), **in that**, in a view of the inner side of the first housing shell (11) in the separation direction (50):
- the rib portion (36) has a rib outer contour (38) with a rib surface,
- the expansion portion (37) has an expansion outer contour (43) with an expansion portion surface,
- the area covered by ribs (41, 42) within the rib outer contour (38) is at least 30%, in particular at least 35%, of the rib surface, and
- the area covered by ribs within the expansion outer contour (43) is less than 10%, in particular less than 5%, preferably 0%, of the expansion portion surface.

11. Work apparatus according to Claim 10,
**characterized in that**, in a view of the inner side of the first housing shell (11) in the separation direction (50), the curvature portion (34) has a total outer contour (44) with a curvature surface, and **in that** the expansion portion surface is at least 20% of the curvature surface.

12. Work apparatus according to Claim 10 or 11,
**characterized in that**, in a view of the inner side of the first housing shell (11) in the separation direction (50), the rib portion (36) is arranged directly adjacent to the outer wall (3) forming the rear end (31) of the housing (40), and **in that**, in a view of the inner side of the first housing shell (11) in the separation direction (50), the expansion portion (37) is arranged directly adjacent to the outer wall (3) delimiting the handle opening (33).

13. Work apparatus according to one of Claims 1 to 12,
**characterized in that** the second housing shell (12) is designed to be analogous to the first housing shell (11) with respect to the rib structure (10) and the expansion region (14) or the expansion portion (37), respectively.

14. Work apparatus according to one of Claims 1 to 12,
**characterized in that** the second housing shell (12) also has a rib region (13) and/or a rib portion (36) and an expansion region (14) and/or an expansion portion (37).

15. Work apparatus according to Claim 13 or 14,
**characterized in that** the second housing shell (12) also has a connecting element (28) or a connecting structure, and **in that** the connecting element (28) or the connecting structure of the second housing shell (12) is arranged in the rib region (13) of the second housing shell (12).

## Revendications

1. Appareil de travail manuel comprenant un boîtier (40) et un outil (39) disposé sur celui-ci, le boîtier (40) comportant une extrémité arrière (31), à laquelle est associée une zone d'utilisation (2) du boîtier (40), le boîtier (40) comportant une extrémité avant (32), sur laquelle l'outil (39) est disposé, le boîtier (40) comportant une première coquille (11) de boîtier et une seconde coquille (12) de boîtier qui peuvent être séparées ou assemblées dans une direction de séparation (50) lors du montage du boîtier (40), le boîtier (40) comportant une paroi extérieure (3), la zone d'utilisation (2) comportant une ouverture de préhension (33) traversant totalement le boîtier (40) dans la direction de séparation (50), qui est délimitée, dans la zone de l'extrémité arrière (31) du boîtier (40), par une section tubulaire (9) de la paroi extérieure (3) du boîtier (40), la paroi extérieure (3) de la première coquille (11) de boîtier étant renforcée par une structure nervurée (10) située à l'intérieur du boîtier (40) dans la zone de la section tubulaire (9),
**caractérisé en ce que** la première coquille (11) de boîtier comporte dans une vue dans la direction de séparation (50) sur le côté situé à l'intérieur de la première coquille (11) de boîtier dans la zone de la section tubulaire (9) :
- une zone nervurée (13) rigide continue, dans laquelle la structure nervurée (10) est disposée, et
- une zone d'expansion (14) élastique continue destinée à absorber élastiquement de l'énergie se libérant lors d'un impact de l'appareil de travail (1),
que la zone d'expansion (14) jouxte directement la zone nervurée (13) et présente une distance (a) par rapport à l'extrémité arrière (31) du boîtier (40) plus grande que la zone nervurée (13), et que la zone d'expansion (14) est sensiblement, en particulier totalement, dépourvue de la structure nervurée (10).

2. Appareil de travail selon la revendication 1,
**caractérisé en ce que** la section tubulaire (9) s'étend le long d'un axe central longitudinal (20), que l'axe central longitudinal (20) divise la section tubulaire (9) dans une vue dans la direction de séparation (50) sur le côté situé à l'intérieur de la première coquille (11) de boîtier en une moitié d'expansion (17) associée à l'ouverture de préhension (33) et en une moitié nervurée (18) associée à l'extrémité arrière (31), en particulier que la zone d'expansion (14) continue est totalement disposée dans la moitié d'expansion (17).

3. Appareil de travail selon la revendication 2,
**caractérisé en ce que** la zone nervurée (13) continue est disposée à la fois dans la moitié nervurée (18) et dans la moitié d'expansion (17).

4. Outil de travail selon la revendication 2 ou la revendication 3,
**caractérisé en ce que** la zone d'expansion (14) s'étend en direction de l'axe central longitudinal (20) depuis un point de départ (21) jusqu'à un point de fin (22) dans une zone d'extension (23), que l'ouverture de préhension (33) possède dans une vue dans la direction de séparation (50) sur le boîtier (40) un centre de gravité de surface (48), et que la zone d'extension (23) de la zone d'expansion (14) continue s'étend dans cette vue par rapport au centre de gravité de surface (48) dans une plage angulaire (Δ) continue d'au moins 30°, en particulier d'au moins 40°, de manière préférée d'au moins 50°.

5. Appareil de travail selon la revendication 4,
**caractérisé en ce que** la structure nervurée (10) comporte plusieurs nervures (41, 42), que des nervures (41, 42) directement adjacentes présentent chacune par rapport au centre de gravité de surface (48) de l'ouverture de préhension (33) une distance angulaire voisine les unes par rapport aux autres, et que la distance angulaire voisine la plus grande (αₘₐₓ) des plusieurs nervures est inférieure à 25°, en particulier est inférieure à 20°.

6. Appareil de travail selon l'une des revendications 1 à 5,
**caractérisé en ce que** l'appareil de travail (1) est conçu de telle sorte qu'il peut être placé sur un plan horizontal (E) dans une position de placement prévue à cet effet, que la zone d'expansion (14) possède une hauteur d'expansion (hd) maximale mesurée perpendiculairement au plan horizontal (E) dans la position de placement, que l'ouverture de préhension (33) possède une hauteur d'ouverture (ho) maximale mesurée perpendiculairement au plan horizontal (E) dans la position de placement, et que la hauteur d'expansion (hd) maximale est égale à au moins 50 %, en particulier à au moins 60 %, de manière préférée à au moins 70 % de la hauteur d'ouverture (ho) maximale.

7. Appareil de travail selon l'une des revendications 1 à 6,
**caractérisé en ce que** la zone nervurée (13) est disposée directement de manière adjacente à la paroi extérieure (3) formant l'extrémité arrière (31) du boîtier (40) dans une vue dans la direction de séparation (50) sur le côté situé à l'intérieur de la première coquille (11) de boîtier, et que la zone d'expansion (14) est disposée de manière directement adjacente à la paroi extérieure (3) délimitant l'ouverture de préhension (33) dans une vue dans la direction de séparation (50) sur le côté situé à l'intérieur de la première coquille (11) de boîtier.

8. Appareil de travail selon l'une des revendications 1 à 7,
**caractérisé en ce que** la première coquille (11) de boîtier comporte un élément de liaison (28) ou une structure de liaison, en particulier un dôme de vissage, destiné(e) à relier la première coquille (11) de boîtier à la seconde coquille (12) de boîtier, et que plusieurs nervures (42) de la structure nervurée (10) sont reliées de telle sorte à l'élément de liaison (28) et sont disposées de telle sorte dans la première coquille (11) de boîtier qu'elles peuvent appliquer de la force dans l'élément de liaison (28), et en particulier que l'élément de liaison (28) ou la structure de liaison est disposé(e) dans la zone nervurée (13).

9. Appareil de travail selon l'une des revendications 1 à 8,
**caractérisé en ce que** la première coquille (11) de boîtier et la seconde coquille (12) de boîtier sont constituées en totalité de matière plastique renforcée par des fibres de verre, en particulier de polyamide 6 (PA6) avec une teneur en fibres de verre de 15 % (PA6GF15), de manière préférée de 30 % (PA6GF30), le polyamide 6 (PA6) étant modifié en particulier pour résister aux chocs.

10. Appareil de travail manuel comprenant un boîtier (40) et un outil (39) disposé sur celui-ci, le boîtier (40) comportant une extrémité arrière (31), à laquelle est associée une zone d'utilisation (2) du boîtier (40), le boîtier (40) comportant une extrémité avant (32), sur laquelle l'outil (39) est disposé, le boîtier (40) s'étendant le long d'un axe longitudinal (49) depuis l'extrémité arrière (31) vers l'extrémité avant (32), le boîtier (40) comportant une première coquille (11) de boîtier et une seconde coquille (12) de boîtier qui peuvent être séparées ou assemblées dans une direction de séparation (50) lors du montage du boîtier (40), le boîtier (40) comportant une paroi extérieure (3), la zone d'utilisation (2) comportant une ouverture de préhension (33) traversant totalement le boîtier (40) dans la direction de séparation (50), l'ouverture de préhension (33) comportant un point de départ (A), le point de départ (A) présentant dans une vue dans la direction de séparation (50) sur le côté situé à l'intérieur de la première coquille (11) de boîtier vers l'extrémité arrière (31) du boîtier (40) la distance la plus petite (k) mesurée en direction de l'axe longitudinal (49), le boîtier (40) comportant une section d'incurvation (34) qui s'étend depuis l'extrémité arrière (31) vers le point de départ (A) en direction de l'axe longitudinal (49), la paroi extérieure (3) de la première coquille (11) de boîtier étant renforcée par une structure nervurée (10) située à l'intérieur dans le boîtier (40) dans la zone de la section d'incurvation (34),
**caractérisé en ce que** la première coquille (11) de boîtier comporte dans une vue dans la direction de séparation (50) sur le côté situé à l'intérieur de la première coquille (11) de boîtier dans la section d'incurvation (34) :
- une première section nervurée (36) rigide continue, dans laquelle des nervures (41, 42) de la structure nervurée (10) sont disposées, et
- une zone d'expansion (37) élastique continue destinée à absorber élastiquement de l'énergie se libérant lors d'un impact de l'appareil de travail (1),
**en ce que** la section d'expansion (37) jouxte directement la section nervurée (36) et présente une distance plus grande (a) par rapport à l'extrémité arrière (31) du boîtier (40) que la section nervurée (36), que dans la vue dans la direction de séparation (50) sur le côté situé à l'intérieur de la première coquille (11) de boîtier :
- la section nervurée (36) comporte un contour extérieur nervuré (38) avec une surface nervurée,
- la section d'expansion (37) comporte un contour extérieur d'expansion (43) avec une surface de section d'expansion,
- la proportion de surface couverte de nervures (41, 42) à l'intérieur du contour extérieur nervuré (38) est égale au moins à 30 %, en particulier à au moins 35 % de la surface nervurée,
- la proportion de surface couverte de nervures à l'intérieur du contour extérieur d'expansion (43) est inférieure à 10 %, en particulier inférieure à 5 %, de manière préférée 0 % de la surface de section d'expansion.

11. Appareil de travail selon la revendication 10,
**caractérisé en ce que** la section d'incurvation (34) comporte dans une vue dans la direction de séparation (50) sur le côté situé à l'intérieur de la première coquille (11) de boîtier un contour extérieur total (44) avec une surface d'incurvation, et que la surface de section d'expansion est égale à au moins 20 % de la surface d'incurvation.

12. Outil de travail selon la revendication 10 ou la revendication 11,
**caractérisé en ce que** la section nervurée (36) est disposée directement de manière adjacente à la paroi extérieure (3) formant l'extrémité arrière (31) du boîtier (40) dans une vue dans la direction de séparation (50) sur le côté situé à l'intérieur de la première coquille (11) de boîtier, et que la section d'expansion (37) est disposée de manière directement adjacente à la paroi extérieure (3) délimitant l'ouverture de préhension (33) dans une vue dans la direction de séparation (50) sur le côté situé à l'intérieur de la première coquille (11) de boîtier.

13. Appareil de travail selon l'une des revendications 1 à 12,
**caractérisé en ce que** la seconde coquille (12) de boîtier est réalisée de manière similaire à la première coquille (11) de boîtier par rapport à la structure nervurée (10) et à la zone d'expansion (14) ou à la section d'expansion (37).

14. Appareil de travail selon l'une des revendications 1 à 12,
**caractérisé en ce que** la seconde coquille (12) de boîtier comporte également une zone nervurée (13) et/ou une section nervurée (36) et une zone d'expansion (14) et/ou une section d'expansion (37).

15. Outil de travail selon la revendication 13 ou la revendication 14,
**caractérisé en ce que** la seconde coquille (12) de boîtier comporte également un élément de liaison (28) ou une structure de liaison, et que l'élément de liaison (28) ou la structure de liaison de la seconde coquille (12) de boîtier est disposé(e) dans la zone nervurée (13) de la seconde coquille (12) de boîtier.
